# EUROPEAN PATENT APPLICATION

(11) **EP 4 832 438 A1**
(43) Date of publication of application: **28.10.2026**
(21) Application number: 24916810.5
(22) Date of filing: 31.12.2024
(51) Int. Cl.: H04L 41/14

(54) **COMMUNICATION METHOD AND APPARATUS**

(30) Priority: 11.01.2024 CN 202410048093
(71) Applicant: Huawei Technologies Co., Ltd., Shenzhen, Guangdong 518129 (CN)
(72) Inventor: GUO, Tao, Shenzhen, Guangdong 518129 (CN); SUN, Haiyang, Shenzhen, Guangdong 518129 (CN); WU, Yizhuang, Shenzhen, Guangdong 518129 (CN)
(74) Representative: Goddar, Heinz J.
(86) International application number: PCT/CN2024/144562
(87) International publication number: WO 2025/148763

(57) **Abstract**

A communication method and apparatus are provided. The method includes: A first network element sends a first message to a second network element, where the first message includes an analysis identifier, and the first message is used to request a model for providing a service corresponding to the analysis identifier. The first network element receives a second message from the second network element, where the second message includes a first identifier, information about M network elements, and information about a first model, the first identifier is associated with the analysis identifier, the first identifier corresponds to at least two vertical federated learning models, the M network elements provide a service by using the at least two vertical federated learning models, M is a positive integer, and the at least two vertical federated learning models include the first model. In the foregoing method, the first network element requests, from the second network element, the model for providing the service corresponding to an analysis identifier. When the second network element determines to use a vertical federated learning model, the second network element sends the second message to the first network element, so that the first network element can initiate, based on content in the second message, execution of an analysis task by using the vertical federated learning model.

## Description

### CROSS-REFERENCE TO RELATED APPLICATIONS

This application claims priority to Chinese Patent Application No. 202410048093.9, filed with the China National Intellectual Property Administration on January 11, 2024 and entitled "COMMUNICATION METHOD AND APPARATUS", which is incorporated herein by reference in its entirety.

### TECHNICAL FIELD

This application relates to the field of communication technologies, and in particular, to a communication method and an apparatus.

### BACKGROUND

Joint learning among a plurality of network data analytics function (network data analytics function, NWDAF) network elements is a machine learning technology in a core network. In joint learning, machine learning (machine learning, ML) models are trained among a plurality of distributed entities that hold local datasets, without exchanging/sharing local datasets. Compared with traditional centralized machine learning, this machine learning technology does not need to upload all local datasets to a single server, and therefore can address key issues in data privacy, data security, data access permission, and the like.

According to different characteristics of data sources of participants, federated learning may be divided into three types: horizontal federated learning, vertical federated learning, and federated transfer learning. Currently, a 5G core network (5GCore, 5GC) supports only horizontal federated learning and execution of analysis tasks by using a horizontal federated learning model. However, how to execute analysis tasks by using a vertical federated learning model is a problem worthy of attention.

### SUMMARY

Embodiments of this application provide a communication method and apparatus, to execute an analysis task by using a vertical federated learning model.

According to a first aspect, this application provides a communication method. The method may be performed by a first network element or a chip in the first network element. The method includes the following steps. The first network element sends a first message to a second network element, where the first message includes an analysis identifier, and the first message is used to request a model for providing a service corresponding to the analysis identifier; the first network element receives a second message from the second network element, where the second message includes a first identifier, information about M network elements, and information about a first model, the first identifier is associated with the analysis identifier, the first identifier corresponds to at least two vertical federated learning models, the M network elements provide a service by using the at least two vertical federated learning models, M is a positive integer, the at least two vertical federated learning models include the first model, and the M network elements each correspond to the at least two vertical federated learning models.

In the foregoing method, the first network element requests, from the second network element, the model for providing the service corresponding to an analysis identifier. When the second network element determines to use a vertical federated learning model, the second network element sends at least one of the first identifier, the information about the M network elements, and the information about the first model to the first network element, so that the first network element can initiate, based on the foregoing information, execution of an analysis task by using the vertical federated learning model.

In a possible design, the first network element determines at least one network element based on the information about the M network elements; and the first network element sends a third message to the at least one network element, where the third message includes the first identifier, and the third message is used to request the vertical federated learning models corresponding to the first identifier to provide a service.

According to the foregoing design, the first network element may send the third message to at least one of the M network elements, that is, initiate execution of an analysis task by the at least one network element by using the vertical federated learning models.

In a possible design, the first network element obtains a first intermediate result based on the first model; the first network element receives at least one intermediate result from the at least one network element, where the at least one network element is in one-to-one correspondence with the at least one intermediate result; the first network element determines an output based on the first intermediate result and the at least one intermediate result; and the first network element sends the output to a service consumer network element.

According to the foregoing design, a producer of the first model may be a primary participant in a vertical federated task corresponding to the first identifier. Therefore, the first network element may collect the intermediate results and determine the output.

In a possible design, the first network element obtains a first intermediate result based on the first model; the first network element sends the first intermediate result to a third network element, where the third network element is one of the at least one network element; the first network element receives an output from the third network element; and the first network element sends the output to a service consumer network element.

According to the foregoing design, a producer of the first model may be a secondary participant in a vertical federated task corresponding to the first identifier, and a producer of a model used by the third network element is a primary participant in the vertical federated task corresponding to the first identifier. Therefore, the first network element may send the first intermediate result to the third network element, and the third network element determines the output.

In a possible design, before the first network element sends the first message to the second network element, the first network element receives a fourth message from the service consumer network element, where the fourth message includes the analysis identifier and/or information about a first object, the first object corresponds to the analysis identifier, and the fourth message is used to request the service corresponding to the analysis identifier.

In a possible design, the third message further includes the information about the first object.

In a possible design, the third message further includes an identifier of the first object in the vertical federated task corresponding to the first identifier.

In a possible design, the second message further indicates or includes a first mapping relationship, and the first mapping relationship is a mapping relationship between the first object and an object for the first object in the vertical federated task corresponding to the first identifier. It may be understood that the first mapping relationship is a mapping relationship between the identifier of the first object and an identifier of the first object in the vertical federated task corresponding to the first identifier. The first network element determines, based on the identifier of the first object and the first mapping relationship, the identifier of the first object in the vertical federated task corresponding to the first identifier.

According to the foregoing design, the first network element may convert the identifier of the first object into the identifier of the first object in the vertical federated task corresponding to the first identifier.

In a possible design, the second message further indicates or includes a first mapping relationship and/or a second mapping relationship. The first mapping relationship is between a network entity identifier and an identifier in the vertical federated task corresponding to the first identifier, and the second mapping relationship is between a user entity identifier and an identifier in the vertical federated task corresponding to the first identifier. It may be understood that the first mapping relationship is a relationship between a network entity identifier and an identifier in the vertical federated task corresponding to the first identifier, and the second mapping relationship is a relationship between a user entity identifier and an identifier in the vertical federated task corresponding to the first identifier. If the information about the first object includes a network entity identifier of the first object, the first network element determines, based on the network entity identifier of the first object and the first mapping relationship, the identifier of the first object in the vertical federated task corresponding to the first identifier. If the information about the first object includes a user entity identifier of the first object, the first network element determines, based on the user entity identifier of the first object and the second mapping relationship, the identifier of the first object in the vertical federated task corresponding to the first identifier. According to the foregoing design, the first network element may convert the network entity identifier or the user entity identifier of the first object into the identifier of the first object in the vertical federated task corresponding to the first identifier, that is, the identifier of the first object in the vertical federated task.

In a possible design, the user entity identifier is an SUPI.

In a possible design, the second message further includes first indication information, and the first indication information indicates that the first model is a vertical federated learning model, or the first indication information indicates that a model corresponding to the first identifier is a vertical federated learning model, or the first indication information indicates that a task corresponding to the first identifier is a vertical federated task.

In a possible design, the information about the M network elements includes at least one of network entity identifiers of the M network elements, subscription correlation addresses of the M network elements, and role information of the M network elements.

In a possible design, a j^{th} network element is any one of the M network elements, and role information of the j^{th} network element indicates a role of a producer of a j^{th} vertical federated learning model in the vertical federated task corresponding to the first identifier. The j^{th} network element is a user of the j^{th} vertical federated learning model, and the at least two vertical federated learning models corresponding to the first identifier include the j^{th} vertical federated learning model, where j is less than or equal to M, and j is a positive integer.

According to a second aspect, this application provides a communication method. The method may be performed by a second network element or a chip in the second network element. The method includes: The second network element receives a first message from a first network element, where the first message includes an analysis identifier, and the first message is used to request a model for providing a service corresponding to the analysis identifier; the second network element sends a second message to the first network element, where the second message includes a first identifier, information about M network elements, and information about a first model, the first identifier is associated with the analysis identifier, the first identifier corresponds to at least two vertical federated learning models, the M network elements provide a service by using the at least two vertical federated learning models, M is a positive integer, the at least two vertical federated learning models include the first model, and the M network elements each correspond to the at least two vertical federated learning models.

In the foregoing method, the first network element requests, from the second network element, the model for providing the service corresponding to an analysis identifier. When the second network element determines to use a vertical federated learning model, the second network element sends at least one of the first identifier, the information about the M network elements, and the information about the first model to the first network element, so that the first network element can initiate, based on the foregoing information, execution of an analysis task by using the vertical federated learning model.

In a possible design, before the second network element sends the second message to the first network element, the second network element determines at least one of the first identifier, the information about the M network elements, and the information about the first model based on the analysis identifier.

In a possible design, the second message further indicates or includes a first mapping relationship and/or a second mapping relationship, the first mapping relationship is between a network entity identifier and an identifier in a vertical federated task corresponding to the first identifier, and the second mapping relationship is between a user entity identifier and an identifier in the vertical federated task corresponding to the first identifier.

In a possible design, the second message further indicates or includes a first mapping relationship, and the first mapping relationship is a mapping relationship between a first object and an object for the first object in the vertical federated task corresponding to the first identifier. It may be understood that the first mapping relationship is a mapping relationship between an identifier of the first object and an identifier of the first object in the vertical federated task corresponding to the first identifier. The first network element determines, based on the identifier of the first object and the first mapping relationship, the identifier of the first object in the vertical federated task corresponding to the first identifier.

In a possible design, the second message further indicates or includes a first mapping relationship and/or a second mapping relationship, the first mapping relationship is between a network entity identifier and an identifier in a vertical federated task corresponding to the first identifier, and the second mapping relationship is between a user entity identifier and an identifier in the vertical federated task corresponding to the first identifier. It may be understood that the first mapping relationship is a relationship between a network entity identifier and an identifier in the vertical federated task corresponding to the first identifier, and the second mapping relationship is a relationship between a user entity identifier and an identifier in the vertical federated task corresponding to the first identifier.

In a possible design, the second message further includes first indication information, and the first indication information indicates that the first model is a vertical federated learning model, or the first indication information indicates that a model corresponding to the first identifier is a vertical federated learning model, or the first indication information indicates that a task corresponding to the first identifier is a vertical federated task.

In a possible design, the information about the M network elements includes at least one of network entity identifiers of the M network elements, subscription correlation addresses of the M network elements, and role information of the M network elements.

In a possible design, a j^{th} network element is any one of the M network elements, and role information of the j^{th} network element indicates a role of a producer of a j^{th} vertical federated learning model in the vertical federated task corresponding to the first identifier. The j^{th} network element is a user of the j^{th} vertical federated learning model, and the at least two vertical federated learning models corresponding to the first identifier include the j^{th} vertical federated learning model, where j is less than or equal to M, and j is a positive integer.

According to a third aspect, this application provides a communication method. The method may be performed by a first network element or a chip in the first network element. The method includes: The first network element sends a first message to a second network element, where the first message includes an analysis identifier, and the first message is used to request a model for providing a service corresponding to the analysis identifier; the first network element receives a second message from the second network element, where the second message includes a second identifier and/or first indication information, the first indication information indicates that the model for providing the service corresponding to the analysis identifier is a vertical federated learning model, and the second identifier is used to identify the first message; and the first network element sends a third message to the second network element, where the third message is used to request the service corresponding to the analysis identifier, and the third message includes the second identifier.

According to the foregoing method, the first network element requests, from the second network element, the model for providing the service corresponding to the analysis identifier. When the second network element determines to use a vertical federated learning model, the second network element sends the second identifier and/or the first indication information to the first network element. That is, the second network element does not provide information about a model for the first network element, but uses the first indication information to notify the first network element that the model for providing the service corresponding to the analysis identifier is a vertical federated learning model. The second network element may use the second identifier to request the service corresponding to the analysis identifier, that is, initiate execution of an analysis task by using the vertical federated learning model.

In a possible design, the first network element receives an output from the second network element, and the first network element sends the output to a service consumer network element.

In a possible design, before the first network element sends the first message to the second network element, the first network element receives a fourth message from the service consumer network element, where the fourth message includes the analysis identifier and/or information about a first object, the first object corresponds to the analysis identifier, and the fourth message is used to request the service corresponding to the analysis identifier.

In a possible design, the third message further includes the information about the first object.

In a possible design, the second message further indicates or includes a first mapping relationship, and the first mapping relationship is a mapping relationship between the first object and an object for the first object in a vertical federated task corresponding to the first identifier. It may be understood that the first mapping relationship is a mapping relationship between an identifier of the first object and an identifier of the first object in the vertical federated task corresponding to the first identifier. The first network element determines, based on the identifier of the first object and the first mapping relationship, the identifier of the first object in the vertical federated task corresponding to the first identifier.

According to the foregoing design, the first network element may convert the identifier of the first object into the identifier of the first object in the vertical federated task corresponding to the first identifier.

In a possible design, the second message further indicates or includes a first mapping relationship and/or a second mapping relationship. The first mapping relationship is between a network entity identifier and an identifier in a vertical federated task corresponding to the first identifier, and the second mapping relationship is between a user entity identifier and an identifier in the vertical federated task corresponding to the first identifier. It may be understood that the first mapping relationship is a relationship between a network entity identifier and an identifier in the vertical federated task corresponding to the first identifier, and the second mapping relationship is a relationship between a user entity identifier and an identifier in the vertical federated task corresponding to the first identifier. If the information about the first object includes a network entity identifier of the first object, the first network element determines, based on the network entity identifier of the first object and the first mapping relationship, an identifier of the first object in the vertical federated task corresponding to the first identifier. If the information about the first object includes a user entity identifier of the first object, the first network element determines, based on the user entity identifier of the first object and the second mapping relationship, an identifier of the first object in the vertical federated task corresponding to the first identifier.

According to the foregoing design, the first network element may convert the network entity identifier or the user entity identifier of the first object into the identifier of the first object in the vertical federated task corresponding to the first identifier, that is, the identifier of the first object in the vertical federated task.

According to a fourth aspect, this application provides a communication method. The method may be performed by a second network element or a chip in the second network element. The method includes: The second network element receives a first message from a first network element, where the first message includes an analysis identifier, and the first message is used to request a model for providing a service corresponding to the analysis identifier; the second network element sends a second message to the first network element, where the second message includes a second identifier and/or first indication information, the first indication information indicates that the model for providing the service corresponding to the analysis identifier is a vertical federated learning model, and the second identifier is used to identify the first message; and the second network element receives a third message from the first network element, where the third message is used to request the service corresponding to the analysis identifier, and the third message includes the second identifier.

According to the foregoing method, the first network element requests, from the second network element, a model for providing the service corresponding to the analysis identifier. When the second network element determines to use a vertical federated learning model, the second network element sends the second identifier and/or the first indication information to the first network element. In this way, the first network element may determine, based on the first indication information, to use the vertical federated learning model, and send the third message based on the second identifier, that is, initiate execution of an analysis task by using the vertical federated learning model.

In a possible design, before the second network element sends the second message to the first network element, the second network element determines information about a first model based on the analysis identifier; and the second network element stores a correspondence between the second identifier and the information about the first model.

According to the foregoing method, the second network element stores the correspondence between the second identifier and the information about the first model, so that the second network element can determine the information about the first model based on the second identifier in the third message, and provide, based on the first model, the service corresponding to the analysis identifier. That is, execution of the analysis task by using the vertical federated learning model is initiated.

In a possible design, when the second network element determines the information about the first model based on the analysis identifier, the second network element determines the information about the first model, information about M network elements, and a first identifier based on the analysis identifier. When the second network element stores the correspondence between the second identifier and the information about the first model, the second network element stores a correspondence between the second identifier and the information about the first model, the information about the M network elements, and the first identifier, where the first identifier is associated with the analysis identifier, the first identifier corresponds to at least two vertical federated learning models, the M network elements provide a service by using the at least two vertical federated learning models, M is a positive integer, the at least two vertical federated learning models include the first model, and the M network elements each correspond to the at least two vertical federated learning models.

In a possible design, after the second network element receives the third message from the first network element, the second network element determines the information about the first model, the information about the M network elements, and the first identifier based on the second identifier; the second network element determines at least one network element based on the information about the M network elements; the second network element sends a fifth message to the at least one network element, where the fifth message includes the first identifier, and the fifth message is used to request the vertical federated learning models corresponding to the first identifier to provide a service; the second network element obtains a first intermediate result based on the first model; the second network element receives at least one intermediate result from the at least one network element, where the at least one network element is in one-to-one correspondence with the at least one intermediate result; and the second network element determines the output based on the first intermediate result and the at least one intermediate result.

In the foregoing design, the second network element is a primary participant in a vertical federated task corresponding to the first identifier.

In a possible design, after the second network element receives the third message from the first network element, the second network element determines the information about the first model, the information about the M network elements, and the first identifier based on the second identifier; the second network element determines at least one network element based on the information about the M network elements; the second network element sends a fifth message to the at least one network element, where the fifth message includes the first identifier, and the third message is used to request the vertical federated learning models corresponding to the first identifier to provide a service; the second network element obtains a first intermediate result based on the first model; the second network element sends the first intermediate result to the third network element; and the second network element receives an output from the third network element.

In the foregoing design, the second network element is a secondary/primary participant in a vertical federated task corresponding to the first identifier. A producer of a model used by the third network element is a secondary/primary participant in the vertical federated task corresponding to the first identifier.

In a possible design, the second network element sends the output to the first network element.

In a possible design, the third message further includes information about a first object, and/or an identifier of the first object in the vertical federated task corresponding to the first identifier.

In a possible design, the second message further indicates a first mapping relationship and/or a second mapping relationship, the first mapping relationship is between a network entity identifier and an identifier in the vertical federated task corresponding to the first identifier, and the second mapping relationship is between a user entity identifier and an identifier in the vertical federated task corresponding to the first identifier.

In a possible design, the second message further indicates or includes a first mapping relationship, and the first mapping relationship is a mapping relationship between the first object and an object for the first object in the vertical federated task corresponding to the first identifier. It may be understood that the first mapping relationship is a mapping relationship between an identifier of the first object and an identifier of the first object in the vertical federated task corresponding to the first identifier. The first network element determines, based on the identifier of the first object and the first mapping relationship, the identifier of the first object in the vertical federated task corresponding to the first identifier.

In a possible design, the second message further indicates or includes a first mapping relationship and/or a second mapping relationship, the first mapping relationship is between a network entity identifier and an identifier in the vertical federated task corresponding to the first identifier, and the second mapping relationship is between a user entity identifier and an identifier in the vertical federated task corresponding to the first identifier. It may be understood that the first mapping relationship is a relationship between a network entity identifier and an identifier in the vertical federated task corresponding to the first identifier, and the second mapping relationship is a relationship between a user entity identifier and an identifier in the vertical federated task corresponding to the first identifier.

In a possible design, the information about the M network elements includes at least one of network entity identifiers of the M network elements, subscription correlation addresses of the M network elements, and role information of the M network elements.

In a possible design, a j^{th} network element is any one of the M network elements, and role information of the j^{th} network element indicates a role of a producer of a j^{th} vertical federated learning model in the vertical federated task corresponding to the first identifier. The j^{th} network element is a user of the j^{th} vertical federated learning model, and the at least two vertical federated learning models corresponding to the first identifier include the j^{th} vertical federated learning model, where j is less than or equal to M, and j is a positive integer.

According to a fifth aspect, this application provides a communication apparatus. The method includes a transceiver unit and a processing unit. The transceiver unit is configured to receive and send a message. The processing unit is configured to: send a first message to a second network element, and receive a second message from the second network element through the transceiver unit, where the first message includes an analysis identifier, and the first message is used to request a model for providing a service corresponding to the analysis identifier; and the second message includes a first identifier, information about M network elements, and information about a first model, the first identifier is associated with the analysis identifier, the first identifier corresponds to at least two vertical federated learning models, the M network elements provide a service by using the at least two vertical federated learning models, M is a positive integer, the at least two vertical federated learning models include the first model, and the M network elements each correspond to the at least two vertical federated learning models.

In a possible design, the processing unit is configured to determine at least one network element based on the information about the M network elements; and the transceiver unit is configured to send a third message to the at least one network element, where the third message includes the first identifier, and the third message is used to request the vertical federated learning models corresponding to the first identifier to provide a service.

In a possible design, the processing unit is configured to obtain a first intermediate result based on the first model; the transceiver unit is configured to receive at least one intermediate result from the at least one network element, where the at least one network element is in one-to-one correspondence with the at least one intermediate result; the processing unit is configured to determine an output based on the first intermediate result and the at least one intermediate result; and the transceiver unit is configured to send the output to a service consumer network element.

In a possible design, the processing unit is configured to obtain a first intermediate result based on the first model; and the transceiver unit is configured to: send the first intermediate result to a third network element, receive an output from the third network element, and send the output to a service consumer network element, where the third network element is one of the at least one network element.

In a possible design, the transceiver unit is configured to: before sending the first message to the second network element, receive a fourth message from the service consumer network element, where the fourth message includes the analysis identifier and information about a first object, the first object corresponds to the analysis identifier, and the fourth message is used to request the service corresponding to the analysis identifier.

In a possible design, the third message further includes the information about the first object.

In a possible design, the second message further indicates or includes a first mapping relationship, and the first mapping relationship is a mapping relationship between the first object and an object for the first object in a vertical federated task corresponding to the first identifier. It may be understood that the first mapping relationship is a mapping relationship between an identifier of the first object and an identifier of the first object in the vertical federated task corresponding to the first identifier. The first network element determines, based on the identifier of the first object and the first mapping relationship, the identifier of the first object in the vertical federated task corresponding to the first identifier.

In a possible design, the second message further indicates or includes a first mapping relationship and/or a second mapping relationship, the first mapping relationship is between a network entity identifier and an identifier in a vertical federated task corresponding to the first identifier, and the second mapping relationship is between a user entity identifier and an identifier in the vertical federated task corresponding to the first identifier. It may be understood that the first mapping relationship is a relationship between a network entity identifier and an identifier in the vertical federated task corresponding to the first identifier, and the second mapping relationship is a relationship between a user entity identifier and an identifier in the vertical federated task corresponding to the first identifier.

In a possible design, the third message further includes an identifier of the first object in a vertical federated task corresponding to the first identifier. The second message further indicates or includes a first mapping relationship and/or a second mapping relationship, the first mapping relationship is between a network entity identifier and an identifier in the vertical federated task corresponding to the first identifier, and the second mapping relationship is between a user entity identifier and an identifier in the vertical federated task corresponding to the first identifier. The processing unit is configured to: if the information about the first object includes a network entity identifier of the first object, determine, based on the network entity identifier of the first object and the first mapping relationship, the identifier of the first object in the vertical federated task corresponding to the first identifier; or if the information about the first object includes a user entity identifier of the first object, determine, based on the user entity identifier of the first object and the second mapping relationship, the identifier of the first object in the vertical federated task corresponding to the first identifier.

In a possible design, the user entity identifier is an SUPI.

In a possible design, the second message further includes first indication information, and the first indication information indicates that the first model is a vertical federated learning model, or the first indication information indicates that a model corresponding to the first identifier is a vertical federated learning model, or the first indication information indicates that a task corresponding to the first identifier is a vertical federated task.

In a possible design, the information about the M network elements includes at least one of network entity identifiers of the M network elements, subscription correlation addresses of the M network elements, and role information of the M network elements.

In a possible design, a j^{th} network element is any one of the M network elements, and role information of the j^{th} network element indicates a role of a producer of a j^{th} vertical federated learning model in the vertical federated task corresponding to the first identifier. The j^{th} network element is a user of the j^{th} vertical federated learning model, and the at least two vertical federated learning models corresponding to the first identifier include the j^{th} vertical federated learning model, where j is less than or equal to M, and j is a positive integer.

According to a sixth aspect, this application provides a communication apparatus. The apparatus includes a transceiver unit and a processing unit. The transceiver unit is configured to receive and send a message. The processing unit is configured to: receive a first message from a first network element, and send a second message to the first network element through the transceiver unit, where the first message includes an analysis identifier, and the first message is used to request a model for providing a service corresponding to the analysis identifier; and the second message includes a first identifier, information about M network elements, and information about a first model, the first identifier is associated with the analysis identifier, the first identifier corresponds to at least two vertical federated learning models, the M network elements provide a service by using the at least two vertical federated learning models, M is a positive integer, the at least two vertical federated learning models include the first model, and the M network elements each correspond to the at least two vertical federated learning models.

In a possible design, the processing unit is configured to: before the second message is sent to the first network element, determine at least one of the first identifier, the information about the M network elements, and the information about the first model based on the analysis identifier.

In a possible design, the second message further indicates or includes a first mapping relationship, and the first mapping relationship is a mapping relationship between a first object and an object for the first object in a vertical federated task corresponding to the first identifier. It may be understood that the first mapping relationship is a mapping relationship between an identifier of the first object and an identifier of the first object in the vertical federated task corresponding to the first identifier. The first network element determines, based on the identifier of the first object and the first mapping relationship, the identifier of the first object in the vertical federated task corresponding to the first identifier.

In a possible design, the second message further indicates or includes a first mapping relationship and/or a second mapping relationship, the first mapping relationship is between a network entity identifier and an identifier in a vertical federated task corresponding to the first identifier, and the second mapping relationship is between a user entity identifier and an identifier in the vertical federated task corresponding to the first identifier. It may be understood that the first mapping relationship is a relationship between a network entity identifier and an identifier in the vertical federated task corresponding to the first identifier, and the second mapping relationship is a relationship between a user entity identifier and an identifier in the vertical federated task corresponding to the first identifier.

In a possible design, the second message further indicates or includes a first mapping relationship and/or a second mapping relationship, the first mapping relationship is between a network entity identifier and an identifier in a vertical federated task corresponding to the first identifier, and the second mapping relationship is between a user entity identifier and an identifier in the vertical federated task corresponding to the first identifier.

In a possible design, the second message further includes first indication information, and the first indication information indicates that the first model is a vertical federated learning model, or the first indication information indicates that a model corresponding to the first identifier is a vertical federated learning model, or the first indication information indicates that a task corresponding to the first identifier is a vertical federated task.

In a possible design, the information about the M network elements includes at least one of network entity identifiers of the M network elements, subscription correlation addresses of the M network elements, and role information of the M network elements.

In a possible design, a j^{th} network element is any one of the M network elements, and role information of the j^{th} network element indicates a role of a producer of a j^{th} vertical federated learning model in the vertical federated task corresponding to the first identifier. The j^{th} network element is a user of the j^{th} vertical federated learning model, and the at least two vertical federated learning models corresponding to the first identifier include the j^{th} vertical federated learning model, where j is less than or equal to M, and j is a positive integer.

According to a seventh aspect, this application provides a communication apparatus. The method includes a transceiver unit and a processing unit. The transceiver unit is configured to receive and send a message. The processing unit is configured to: send a first message to a second network element, receive a second message from the second network element, and send a third message to the second network element through the transceiver unit, where the first message includes an analysis identifier, and the first message is used to request a model for providing a service corresponding to the analysis identifier; the second message includes a second identifier and/or first indication information, the first indication information indicates that the model for providing the service corresponding to the analysis identifier is a vertical federated learning model, and the second identifier is used to identify the first message; and the third message is used to request the service corresponding to the analysis identifier, and the third message includes the second identifier.

In a possible design, the transceiver unit is configured to: receive an output from the second network element; and send the output to a service consumer network element.

In a possible design, the transceiver unit is configured to: before sending the first message to the second network element, receive a fourth message from the service consumer network element, where the fourth message includes the analysis identifier and information about a first object, the first object corresponds to the analysis identifier, and the fourth message is used to request the service corresponding to the analysis identifier.

In a possible design, the third message further includes the information about the first object.

In a possible design, the second message further indicates or includes a first mapping relationship, and the first mapping relationship is a mapping relationship between the first object and an object for the first object in a vertical federated task corresponding to the first identifier. It may be understood that the first mapping relationship is a mapping relationship between an identifier of the first object and an identifier of the first object in the vertical federated task corresponding to the first identifier. The first network element determines, based on the identifier of the first object and the first mapping relationship, the identifier of the first object in the vertical federated task corresponding to the first identifier.

In a possible design, the second message further indicates or includes a first mapping relationship and/or a second mapping relationship, the first mapping relationship is between a network entity identifier and an identifier in a vertical federated task corresponding to the first identifier, and the second mapping relationship is between a user entity identifier and an identifier in the vertical federated task corresponding to the first identifier. It may be understood that the first mapping relationship is a relationship between a network entity identifier and an identifier in the vertical federated task corresponding to the first identifier, and the second mapping relationship is a relationship between a user entity identifier and an identifier in the vertical federated task corresponding to the first identifier.

In a possible design, the third message further includes an identifier of the first object in the vertical federated learning model. The second message further indicates a first mapping relationship and/or a second mapping relationship, the first mapping relationship is between a network entity identifier and an identifier in the vertical federated learning model, and the second mapping relationship is between a user entity identifier and an identifier in the vertical federated learning model. The processing unit is configured to: if the information about the first object includes a network entity identifier of the first object, determine the identifier of the first object in the vertical federated learning model based on the network entity identifier of the first object and the first mapping relationship; or if the information about the first object includes a user entity identifier of the first object, determine the identifier of the first object in the vertical federated learning model based on the user entity identifier of the first object and the second mapping relationship.

According to an eighth aspect, this application provides a communication apparatus. The method includes a transceiver unit and a processing unit. The transceiver unit is configured to receive and send a message. The processing unit is configured to: receive a first message from a first network element, send a second message to the first network element, and receive a third message from the first network element through the transceiver unit, where the first message includes an analysis identifier, and the first message is used to request a model for providing a service corresponding to the analysis identifier; the second message includes a second identifier and/or first indication information, the first indication information indicates that the model for providing the service corresponding to the analysis identifier is a vertical federated learning model, and the second identifier is used to identify the first message; and the third message is used to request the service corresponding to the analysis identifier, and the third message includes the second identifier.

In a possible design, the processing unit is configured to: before sending the second message to the first network element, determine, by a second network element, information about a first model based on the analysis identifier; and store a correspondence between the second identifier and the information about the first model.

In a possible design, the processing unit is configured to: when determining the information about the first model based on the analysis identifier, determine, by the second network element, the information about the first model, information about M network elements, and a first identifier based on the analysis identifier; and when the second network element stores the correspondence between the second identifier and the information about the first model, store a correspondence between the second identifier and the information about the first model, the information about the M network elements, and the first identifier, where the first identifier is associated with the analysis identifier, the first identifier corresponds to at least two vertical federated learning models, the M network elements provide a service by using the at least two vertical federated learning models, M is a positive integer, the at least two vertical federated learning models include the first model, and the M network elements each correspond to the at least two vertical federated learning models.

In a possible design, the processing unit is configured to: after receiving the third message from the first network element, determine the information about the first model, the information about the M network elements, and the first identifier based on the second identifier; and determine at least one network element based on the information about the M network elements. The transceiver unit is configured to send a fifth message to the at least one network element, where the fifth message includes the first identifier, and the fifth message is used to request the vertical federated learning models corresponding to the first identifier to provide a service. The processing unit is configured to obtain a first intermediate result based on the first model. The transceiver unit is configured to receive at least one intermediate result from the at least one network element, where the at least one network element is in one-to-one correspondence with the at least one intermediate result. The processing unit is configured to determine the output based on the first intermediate result and the at least one intermediate result.

In a possible design, the processing unit is configured to: after receiving the third message from the first network element, determine the information about the first model, the information about the M network elements, and the first identifier based on the second identifier; and determine at least one network element based on the information about the M network elements. The transceiver unit is configured to send a fifth message to the at least one network element, where the fifth message includes the first identifier, and the third message is used to request the vertical federated learning models corresponding to the first identifier to provide a service. The processing unit is configured to obtain a first intermediate result based on the first model. The transceiver unit is configured to: send the first intermediate result to the third network element, and receive, by the second network element, an output from the third network element.

In a possible design, the transceiver unit is configured to send the output to the first network element.

In a possible design, the third message further includes information about a first object, and/or an identifier of the first object in a vertical federated task corresponding to the first identifier.

In a possible design, the second message further indicates a first mapping relationship and/or a second mapping relationship, the first mapping relationship is between a network entity identifier and an identifier in the vertical federated task corresponding to the first identifier, and the second mapping relationship is between a user entity identifier and an identifier in the vertical federated task corresponding to the first identifier.

In a possible design, the second message further indicates or includes a first mapping relationship, and the first mapping relationship is a mapping relationship between the first object and an object for the first object in the vertical federated task corresponding to the first identifier. It may be understood that the first mapping relationship is a mapping relationship between an identifier of the first object and an identifier of the first object in the vertical federated task corresponding to the first identifier. The first network element determines, based on the identifier of the first object and the first mapping relationship, the identifier of the first object in the vertical federated task corresponding to the first identifier.

In a possible design, the second message further indicates or includes a first mapping relationship and/or a second mapping relationship, the first mapping relationship is between a network entity identifier and an identifier in the vertical federated task corresponding to the first identifier, and the second mapping relationship is between a user entity identifier and an identifier in the vertical federated task corresponding to the first identifier. It may be understood that the first mapping relationship is a relationship between a network entity identifier and an identifier in the vertical federated task corresponding to the first identifier, and the second mapping relationship is a relationship between a user entity identifier and an identifier in the vertical federated task corresponding to the first identifier.

In a possible design, the information about the M network elements includes at least one of network entity identifiers of the M network elements, subscription correlation addresses of the M network elements, and role information of the M network elements.

In a possible design, a j^{th} network element is any one of the M network elements, and role information of the j^{th} network element indicates a role of a producer of a j^{th} vertical federated learning model in the vertical federated task corresponding to the first identifier. The j^{th} network element is a user of the j^{th} vertical federated learning model, and the at least two vertical federated learning models corresponding to the first identifier include the j^{th} vertical federated learning model, where j is less than or equal to M, and j is a positive integer.

According to a ninth aspect, this application provides a communication apparatus. The communication apparatus may be a first apparatus, or may be a module or unit (for example, a chip, a chip system, or a circuit), in the first apparatus, that is in one-to-one correspondence with the method/operations/steps/actions described in any one of the first aspect to the fourth aspect, or may be used in cooperation with the first apparatus.

According to a tenth aspect, this application provides a communication device, including at least one processing element and at least one storage element. The at least one storage element is configured to store a program and data. The at least one processing element is configured to read and execute the program and the data that are stored in the storage element, so that the method according to any one of the first aspect to the fourth aspect of this application is implemented.

According to an eleventh aspect, this application further provides a computer program. When the computer program is run on a computer, the computer is caused to perform the method according to any one of the first aspect to the fourth aspect.

According to a twelfth aspect, this application provides a communication apparatus. The apparatus includes an interface circuit and at least one processor. The interface circuit is configured to provide an input and/or output of a program or instructions for the at least one processor. The at least one processor is configured to execute the program or the instructions, so that the communication apparatus can implement the method according to any one of the first aspect to the fourth aspect.

In a possible manner, the communication apparatus includes the at least one memory, and the at least one memory is configured to store the program or the instructions.

According to a thirteenth aspect, this application provides a computer storage medium. The storage medium stores a software program, and when the software program is read and executed by one or more processors, the method according to any one of the first aspect to the fourth aspect may be implemented.

According to a fourteenth aspect, this application provides a computer program product including instructions. When the instructions are run on a computer, the computer is caused to perform the method according to any one of the first aspect to the fourth aspect.

According to a fifteenth aspect, this application provides a chip system. The chip system includes at least one chip and a memory, and the at least one chip is configured to: read and execute a program stored in the memory, to implement the method according to any one of the first aspect to the fourth aspect.

According to a sixteenth aspect, this application provides a communication system. The system includes a first network element and a second network element, the first network element performs the method according to any one of the first aspect or the third aspect, and the second network element performs the method according to any one of the second aspect or the fourth aspect.

### BRIEF DESCRIPTION OF DRAWINGS

FIG. 1 is a diagram of a 5G network architecture based on a service-based architecture according to this application;
FIG. 2 is a diagram of a vertical federated learning training process according to this application;
FIG. 3 is an overview flowchart of a communication method according to this application;
FIG. 4 is a flowchart 1 of obtaining an output according to this application;
FIG. 5 is a flowchart 2 of obtaining an output according to this application;
FIG. 6 is a flowchart 3 of obtaining an output according to this application;
FIG. 7 is an overview flowchart of another communication method according to this application;
FIG. 8 is a flowchart of executing an analysis task by a first network element and at least one network element by using a vertical federated learning model according to this application;
FIG. 9 is a flowchart of executing an analysis task by a second network element and at least one network element by using a vertical federated learning model according to this application;
FIG. 10 is a flowchart of a still another communication method according to this application;
FIG. 11A and FIG. 11B are a flowchart of a yet another communication method according to this application;
FIG. 12 is a diagram of a structure of a communication apparatus according to this application; and
FIG. 13 is a diagram of a structure of another communication apparatus according to this application.

### DESCRIPTION OF EMBODIMENTS

The following describes implementations of this application by using examples with reference to the accompanying drawings in embodiments of this application. However, implementations of this application may further include a combination of the embodiments without departing from the spirit or scope of this application. For example, other embodiments may be used and structural changes may be made. Therefore, the detailed descriptions of the following embodiments should not be understood in a restrictive sense. Terms used in embodiments of this application are merely used to describe specific embodiments of this application, but are not intended to limit this application.

Embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, and a 5th generation (5th generation, 5G) system or new radio (new radio, NR), or be applied to a future communication system, another similar communication system, or the like.

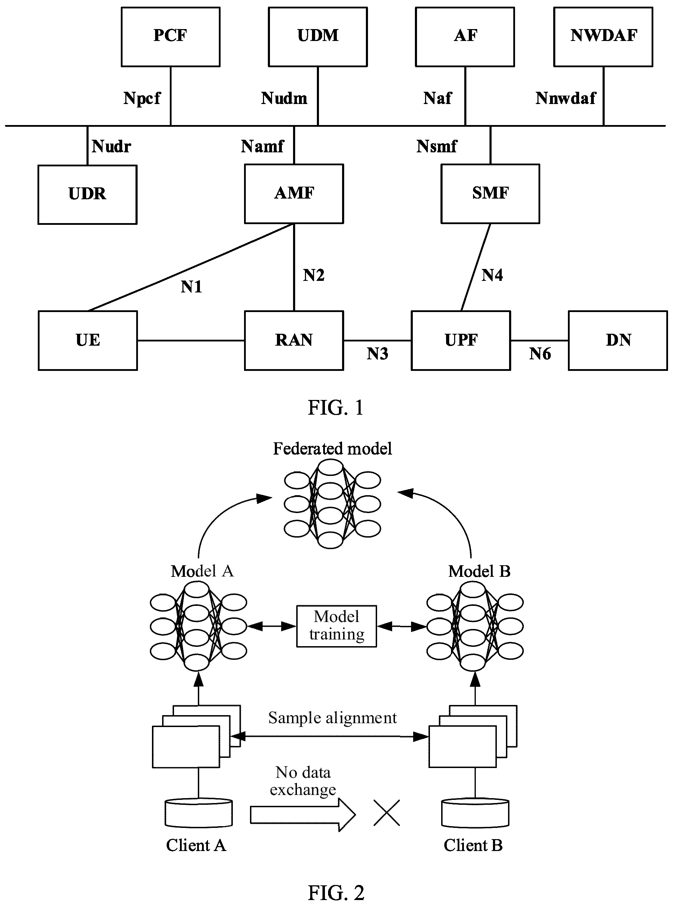

FIG. 1 is a diagram of a 5G network architecture based on a service-based architecture. The 5G network architecture shown in FIG. 1 may include a terminal device, an access network device, and a core network device. The terminal device accesses a data network (data network, DN) through the access network device and the core network device. The core network device includes a plurality of network functions (network function, NF) or network elements, for example, includes some or all of the following network elements: a unified data management (unified data management, UDM) network element, a unified data repository (unified data repository, UDR) network element, an application function (application function, AF) network element, a policy control function (policy control function, PCF) network element, an access and mobility management function (access and mobility management function, AMF) network element, a session management function (session management function, SMF) network element, a user plane function (user plane function, UPF) network element, a network data analytics function (network data analytics function, NWDAF) network element, a network repository function (network repository function, NRF) network element (not shown in the figure), and the like.

The access network device may be a radio access network (radio access network, RAN) device. For example, the radio access network device may be a base station (base station), an evolved NodeB (evolved NodeB, eNodeB), a transmission reception point (transmission reception point, TRP), a next generation NodeB (next generation NodeB, gNB) in a 5G mobile communication system, a next generation base station in a 6th generation (6th generation, 6G) mobile communication system, a base station in a future mobile communication system, an access node in a wireless fidelity (wireless fidelity, Wi-Fi) system, or the like. Alternatively, the radio access network device may be a module or a unit that completes some functions of a base station, for example, a central unit (central unit, CU) or a distributed unit (distributed unit, DU). The radio access network device may be a macro base station, may be a micro base station or an indoor base station, or may be a relay node, a donor node, or the like. A specific technology and a specific device form used by the radio access network device are not limited in embodiments of this application.

The terminal device may be user equipment (user equipment, UE), a mobile station, a mobile terminal, or the like. The terminal device may be widely used in various scenarios, for example, device-to-device (device-to-device, D2D), vehicle to everything (vehicle to everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wear, smart transportation, and smart city. The terminal device may be a mobile phone, a tablet computer, a computer having a wireless transceiver function, a wearable device, a vehicle, an urban air transportation vehicle (like an uncrewed aerial vehicle or a helicopter), a ship, a robot, a mechanical arm, a smart home device, or the like.

The access network device and the terminal device may be at fixed locations, or may be movable. The access network device and the terminal device may be deployed terrestrially, including indoors or outdoors, or may be handheld or vehicle-mounted; or may be deployed on a water surface; or may be deployed on a plane, a balloon, or a man-made satellite in the sky. Application scenarios of the access network device and the terminal device are not limited in embodiments of this application.

The following briefly describes some core network devices.

The AMF network element, AMF for short, includes functions such as mobility management, and access authentication/authorization. In addition, the AMF is also responsible for transport of a user policy between the terminal device and the PCF.

The SMF network element, SMF for short, includes functions such as execution of session management, execution of a control policy delivered by the PCF, UPF selection, and internet protocol (internet protocol, IP) address allocation for the terminal device.

The UPF network element, UPF for short, is used as an interface to the data network, and includes functions such as completion of user plane data forwarding, session/flow-level based charging statistics collection, and bandwidth limitation.

The UDM network element, UDM for short, includes functions such as subscription data management, and user access authorization.

The UDR network element, UDR for short, includes functions such as storage and retrieval of subscription data, policy data, application data, and other types of data.

The NEF network element, NEF for short, is used to support capability and event exposure.

The AF network element, AF for short, transfers a requirement of an application side for a network side, for example, a quality of service (quality of service, QoS) requirement or user status event subscription. The AF may be a third-party functional entity or an application server deployed by an operator.

The PCF network element, PCF for short, includes policy control functions such as session-level or service flow-level charging, QoS bandwidth guarantee, mobility management, and terminal device policy decision-making.

The NRF network element, NRF for short, may be configured to provide a network element discovery function, and provide, based on a request of another network element, network element information corresponding to a network element type. The NRF network element further provides a network element management service, for example, network element registration, update, and deregistration, and network element status subscription and push.

The NWDAF network element, NWDAF for short, has a function of collecting data (including one or more types of data of the terminal device, data of the access network device, data of the core network element, and data of a third-party application device). The data may be data of the terminal device, the access network device, a core network element, or the third-party application device, or may be data of the terminal device on the access network device, the core network element, or the third-party application device. The NWDAF further has functions such as model training, data analytics, and model inference. For example, the NWDAF performs data analytics based on the collected data, and outputs a data analytics result for a network, a network management device, and an application to execute a policy decision. In embodiments of this application, the NWDAF may be an independent network element, or may be co-located with another network element. For example, the NWDAF is disposed in the PCF network element or the AMF network element.

In the 3rd generation partnership project (3rd generation partnership project, 3GPP) release (Release) 17, a training function and an inference function of the NWDAF are split. One NWDAF may support only a model training function or a data inference function, or support both the model training function and the data inference function.

The NWDAF that supports the model training function may be used to train a machine learning (machine learning, ML) model or an artificial intelligence (artificial intelligence, AI) model, and expose a new training service, for example, provide a trained AI model or ML model. The NWDAF that supports the model training function may also be referred to as a training NWDAF or an NWDAF that supports a model training logical function (model training logical function, MTLF) (MTLF for short). For example, the MTLF may perform model training based on obtained data, to obtain a trained model.

The NWDAF that supports the data inference function may be used for inference, analytics information export, and analytics service exposure. The NWDAF that supports the data inference function may also be referred to as an inference NWDAF or an NWDAF that supports an analytics logic function (analytics logical function, AnLF) (AnLF for short). Currently, the AnLF may request a model from the MTLF by using a model subscription (MLModelProvision_Subscribe) service or message. The model may be obtained by the MTLF through training based on data related to the model. Further, the AnLF may input input data to the trained model, to obtain an analysis result or inference data.

It may be understood that the MTLF may be understood as an NWDAF that supports at least the model training function. In a possible implementation method, the MTLF may also support the data inference function. The AnLF may be understood as an NWDAF that supports at least the data inference function. In a possible implementation method, the AnLF may also support the model training function.

It may be understood that the foregoing network elements are an example of an implementation. This application does not exclude that a network element or a device having functions of the foregoing network element has another name or another form in a 6G wireless communication system or an updated wireless communication system.

It may be understood that the foregoing network elements or functions may be network elements in a hardware device, software functions running on dedicated hardware, or virtualized functions instantiated on a platform (for example, a cloud platform). In a possible implementation method, the foregoing network elements or functions may be implemented by one device, or may be jointly implemented by a plurality of devices, or may be implemented by one functional module in one device. This is not specifically limited in embodiments of this application.

In FIG. 1, Nudr, Npcf, Namf, Nudm, Nsmf, Naf, and Nnwdaf are service-based interfaces respectively provided by the UDR, the PCF, the AMF, the UDM, the SMF, the AF and the NWDAF, and are for invoking corresponding service-based operations.

The following describes basic technical concepts in this application.

### 1. Federated learning

Federated learning (federated learning, FL) is a machine learning framework that can effectively help a plurality of users use data and perform machine learning modeling while satisfying requirements of user privacy protection, data security, and government regulations. Federated learning, as a distributed machine learning paradigm, can effectively solve a problem of data silos by jointly modeling without sharing user data, to break down data silos technically and implement artificial intelligence (AI) collaboration.

### 2. Vertical federated learning (vertical federated learning, VFL)

To train data from different domains, distributed model training may be implemented through vertical federated learning (vertical federated learning, VFL). As a machine learning technology, the VFL may be used to implement model training and inference when participants are unwilling to share original data, and is applicable to a case in which training sample identifications (identification, ID) of the participants overlap a lot, but data features of the participants overlap a little. In the VFL, different data features of a common sample of a plurality of participants are combined to perform federated learning, that is, training data of each participant is vertically divided. Therefore, such federated learning is referred to as vertical federated learning.

A linear regression algorithm is used as an example, and a process of vertical federated learning training is shown in FIG. 2.

A client A (Client A) has a dataset ${\left\{{x}_{i}^{A}\right\}}_{i} ∈ {D}_{A}$, and a client B (Client B) has a dataset ${\left\{{x}_{i}^{B}, {y}_{i}\right\}}_{i} ∈ {D}_{B}$. yᵢ is label data. A model to be trained is as follows: $h \left({x}_{i}\right) = {Θ}_{A} {x}_{i}^{A} + {Θ}_{B} {x}_{i}^{B}$ (Formula 1)

It is assumed that an objective function for linear regression is as follows: ${min}_{{Θ}_{A} , {Θ}_{B}} L$ (Formula 2)

L is a loss function, and is specifically as follows: $L = {{\sum }_{i} \left‖{Θ}_{A}{x}_{i}^{A}+{Θ}_{B}{x}_{i}^{B}-{y}_{i}\right‖}^{2} + \frac{λ}{2} \left({\left‖{Θ}_{A}\right‖}^{2}+{\left‖{Θ}_{B}\right‖}^{2}\right)$ (Formula 3)

Because original data D_{A} on the client A and D_{B} on the client B cannot be summarized together, training cannot be performed based on a conventional centralized training method, but training may be performed based on a vertical federated training method, as follows:

Let ${μ}_{i}^{A} = {Θ}_{A} {x}_{i}^{A}$, and ${μ}_{i}^{A} = {Θ}_{B} {x}_{i}^{B}$. Then, L is transformed as follows: $L = {{\sum }_{i} \left‖{μ}_{i}^{A}+{μ}_{i}^{β}-{y}_{i}\right‖}^{2} + \frac{λ}{2} \left({\left‖{Θ}_{A}\right‖}^{2}+{\left‖{Θ}_{B}\right‖}^{2}\right)$ (Formula 4)

Let ${L}_{A} = {\sum }_{i} \left({\left({μ}_{i}^{A}\right)}^{2}\right) + \frac{λ}{2} {\left‖{Θ}_{A}\right‖}^{2} , {L}_{B} = {\sum }_{i} \left({\left({μ}_{i}^{B}-{y}_{i}\right)}^{2}\right) + \frac{λ}{2} {\left‖{Θ}_{B}\right‖}^{2}$, and ${L}_{AB} = 2 {\sum }_{i} {μ}_{i}^{A} \left({μ}_{i}^{B}-{y}_{i}\right)$ . Then, $L = {L}_{A} + {L}_{B} + {L}_{AB}$ (Formula 5)

Let a residual ${d}_{i} = {μ}_{i}^{A} + {μ}_{i}^{B} - {y}_{i}$. Then, gradients of L with respect to Θ_{A} and Θ_{B} are as follows: $\frac{\partial L}{\partial {Θ}_{A}} = {\sum }_{i} {d}_{i} {x}_{i}^{A} + λ {Θ}_{A}$ (6) $\frac{\partial L}{\partial {Θ}_{B}} = {\sum }_{i} {d}_{i} {x}_{i}^{B} + λ {Θ}_{B}$ (Formula 7)

Correspondingly, the model parameters are updated as follows: ${Θ}_{A} : = {Θ}_{A} + α \frac{\partial L}{\partial {Θ}_{A}}$ (Formula 8) ${Θ}_{B} : = {Θ}_{B} + α \frac{\partial L}{\partial {Θ}_{B}}$ (Formula 9)

A training process of vertical federated learning is as follows:
Step 1: The client A and the client B initialize model parameters Θ_{A} and Θ_{B}, respectively.
Step 2: The client A calculates ${μ}_{i}^{A}$ and L_{A} based on Θ_{A}, and then sends ${μ}_{i}^{A}$ and L_{A} to the client B.
Step 3: The client B calculates ${μ}_{i}^{B}$ based on Θ_{B}, further calculates dᵢ, L_{AB}, and L_{B} based on ${μ}_{i}^{A} , {μ}_{i}^{B}$, and yᵢ, and finally calculates L based on L_{A}, L_{AB}, and L_{B}. The client B sends dᵢ to the client A.
Step 4: The client A and the client B calculate $\frac{\partial L}{\partial {Θ}_{A}}$ and $\frac{\partial L}{\partial {Θ}_{B}}$ based on dᵢ respectively, then update the model parameters Θ_{A} and Θ_{B} based on $\frac{\partial L}{\partial {Θ}_{A}}$ and $\frac{\partial L}{\partial {Θ}_{B}}$ respectively.

Step 2 to step 4 are cyclically performed until a model training end condition is satisfied. For example, a quantity of iterations reaches a specified threshold (for example, 10000), or a value of a loss function L is less than a specified threshold (for example, 0.001).

By using the technology, exchange of original data between domains is avoided, and a service experience model can also be obtained through training. After training ends, for a group of data $\left({x}_{j}^{A}, {x}_{j}^{B}\right)$, in an inference phase, the client A and the client B calculate local inference results (or referred to as intermediate results) ${Θ}_{A} {x}_{j}^{A}$ and ${Θ}_{B} {x}_{j}^{B}$ based on the trained model parameters Θ_{A} and Θ_{B} respectively. Then, the client A sends the local inference result ${Θ}_{A} {x}_{j}^{A}$ to the client B. The client B finally determines an inference result (or referred to as a prediction result, or an analysis output, or an output) ${Θ}_{A} {x}_{j}^{A} + {Θ}_{B} {x}_{j}^{B}$.

For ease of description, in the following, Θ_{A} represents a vertical federated learning model trained by the client A, and Θ_{B} represents a vertical federated learning model trained by the client B.

### 3. Participant in vertical federated learning

In this application, a participant in vertical federated learning may also be referred to as a device participating in vertical federated learning, a participant in a vertical federated task, or a participant in a vertical federated learning task. This is not limited in this application. This application is described by using a participant in a vertical federated task as an example.

In vertical federated learning, there are a plurality of types of participants, such as UE, an NWDAF, and an AF. For example, the participants in the vertical federated task include the foregoing client A and client B. Optionally, the participants in the vertical federated task may further include more clients. This is not specifically limited. For another example, the client A and the client B may be different AFs or different NWDAFs, or may be an AF and an NWDAF respectively.

For example, a main role of the participant in the vertical federated task is specifically as follows:

Primary participant: an entity that is responsible for providing label data of training data of the vertical federated task in a training phase of a vertical federated learning model. The primary participant may determine a final output based on the plurality of intermediate results. For example, the client B is a primary participant. The primary participant may also provide a part of training data for the vertical federated task.

Secondary participant: an entity that is responsible for providing a part of the training data of the vertical federated task. The secondary participant may determine an intermediate result by using a corresponding vertical federated learning model, but cannot determine a final output. For example, the client A is a secondary participant.

Optionally, the participants in the vertical federated task may further include a coordinator, and the coordinator is responsible for coordinating training of the participants in the vertical federated learning model.

### 4. Analysis ID (analysis ID)

The analysis identifier may indicate an analysis business, or referred to as an analysis service, or a service for short. The service is related to a model. That is, the model may be used to execute the service. Alternatively, the analysis identifier is related to a model. That is, the model is used to execute a service corresponding to the analysis identifier.

Alternatively, it may be understood that the MTLF is related to the analysis identifier. That is, a model support provided by the MTLF is used to execute the service corresponding to the analysis identifier. For example, the MTLF may be related to one or more analysis identifiers. It may be understood that the MTLF may provide a model of a service corresponding to each of the one or more analysis identifiers. For example, an MTLF1 is related to an analysis identifier 1 and an analysis identifier 2. That is, the MTLF 1 corresponds to the analysis identifier 1 and the analysis identifier 2. In this case, the MTLF1 may provide a model of a service corresponding to the analysis identifier 1 and a model of a service corresponding to the analysis identifier 2.

In this application, a vertical federated task is a task corresponding to vertical federated learning, and the vertical federated task may also be referred to as a vertical federated activity or a vertical federated learning task. The vertical federated task may be associated with the analysis identifier. That is, a vertical federated learning model provided by the vertical federated task can provide a service corresponding to the analysis identifier. Alternatively, it may be understood that there is an association relationship between an identifier of the vertical federated task and the analysis identifier.

The vertical federated task may include training and/or inference. Training may also be referred to as model training, or training of a vertical federated learning model, and is used to obtain a vertical federated learning model. Inference is performing inference or executing an inference task (or a prediction task or an analysis task) by using the vertical federated learning model obtained in the training phase. Inference may also be referred to as model inference, inference of a vertical federated learning model, model prediction, or prediction of a vertical federated learning model. In this application, inference and prediction may be replaced with each other.

An identifier of a vertical federated task is used to identify the vertical federated task, and is used to determine a vertical federated learning model corresponding to the vertical federated task, and/or participant information of the vertical federated task, and/or user information of the vertical federated learning model.

It may be understood that one vertical federated task may correspond to a plurality of vertical federated learning models, and further, there may be a plurality of participants in the vertical federated task. That is, each vertical federated learning model corresponds to one corresponding participant. It may be understood that the participants in the vertical federated task are a part or all of participants in the vertical federated task. Participants in vertical federation jointly participate in the vertical federated task, and obtain independent vertical federated learning models. The participants in vertical federation may include or may not include a coordinator.

Similarly, there may be a plurality of users of the vertical federated learning models. That is, each vertical federated learning model corresponds to one corresponding user. It may be understood that the user of the vertical federated learning model is an entity that performs inference or executes an inference task (or a prediction task or an analysis task) by using the vertical federated learning model obtained in the training phase. Inference may also be referred to as model inference, inference of a vertical federated learning model, model prediction, or prediction of a vertical federated learning model.

In a possible implementation, a participant in the vertical federated task may be the same as a user of the vertical federated learning model. In this case, the two descriptions, the participant in the vertical federated task and the user of the vertical federated learning model, may be replaced with each other. For example, the client A and the client B may be used as participants in a vertical federated task, and may also be used as users of vertical federated learning models. That is, the client A participates in training the vertical federated learning model Θ_{A}, and may also use the vertical federated learning model Θ_{A}, Similarly, the client B participates in training the vertical federated learning model Θ_{B}, and may also use the vertical federated learning model Θ_{B}.

In another possible implementation, a participant in the vertical federated task may be different from a user of the vertical federated learning model. For example, the client A and/or the client B is used only as a participant in the vertical federated task, and are not used as users of vertical federated learning models. For example, the client A participates in training only the vertical federated learning model Θ_{A}. A user of the vertical federated learning model Θ_{A} is not the client A, or the client A does not have permission to use the vertical federated learning model Θ_{A}. For example, the user of the vertical federated learning model Θ_{A} is a client C. That is, the client C may use the vertical federated learning model Θ_{A}, Optionally, the client A cannot use the vertical federated learning model Θ_{A}, If a role of the client A in the vertical federated task is a secondary participant, a role of the client C is also a secondary participant. That is, if the client B participates in training the vertical federated learning model Θ_{B} and may also use the vertical federated learning model Θ_{B}, and a role of the client B in the vertical federated task is a primary participant, an intermediate result calculated by the client C needs to be sent to the client B.

For example, participant information of the vertical federated task may include but is not limited to at least one of a network entity identifier of a participant, a subscription correlation address of the participant, and role information of the participant. User information of the vertical federated learning model may include but is not limited to at least one of a network entity identifier of a user, a subscription correlation address of the user, and role information of the user. The role information of the user is the same as role information of a participant who trains the vertical federated learning model used by the user.

For example, the client A and the client B participate in a vertical federated task A. In a training phase, the client A obtains a vertical federated learning model Θ_{A}, and the client B also obtains a vertical federated learning model Θ_{B}. It is assumed that the client A and the client B may be used as participants in the vertical federated task A, and may also be used as users of the vertical federated learning models. In an inference phase, if the client A receives an identifier of the vertical federated task A, the client A may determine, based on the identifier of the vertical federated task A, the vertical federated learning model Θ_{A} corresponding to the vertical federated task A, and then calculate an intermediate result according to the vertical federated learning model Θ_{A}. Similarly, if the client B receives the identifier of the vertical federated task A, the client B may determine, based on the identifier of the vertical federated task A, the vertical federated learning model Θ_{B} corresponding to the vertical federated task A, and then calculate an intermediate result according to the vertical federated learning model Θ_{B}. In addition, the client A may further determine participant information of the vertical federated task A based on the identifier of the vertical federated task A. For example, the participant information of the vertical federated task A includes a network entity identifier of the client A, a role of the client A in the vertical federated task A being a secondary participant, a network entity identifier of the client B, and a role of the client B in the vertical federated task A being a primary participant. Further, the client A sends an intermediate result obtained through calculation to the client B. Alternatively, the client B may further determine the participant information of the vertical federated task A based on the identifier of the vertical federated task A. Further, the client B may request the intermediate result from the client A.

It may be understood that the client A and/or the client B may also participate in another vertical federated task, that is, have a plurality of vertical federated learning models. A vertical federated learning model, participant information of a corresponding vertical federated task, and/or user information of the vertical federated learning model may be uniquely determined by an identifier of the vertical federated task.

Based on the network system architecture shown in FIG. 1 and the content described in the foregoing related technologies, an embodiment of this application provides several possible communication methods, to execute an analysis task by using a vertical federated learning model. In the following, the following method may be implemented by a first network element or a module or a chip in the first network element, or implemented by a second network element or a module or a chip in the second network element. The first network element may be a core network element. For example, the first network element may be an NWDAF (for example, an AnLF), an AF, or another core network element. For example, the second network element may be an NWDAF (for example, an MTLF) or another core network element.

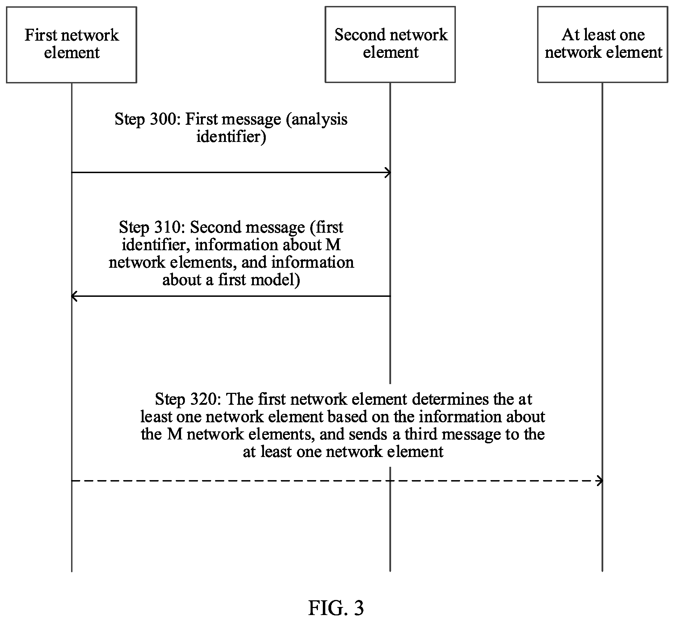

As shown in FIG. 3, this application provides a communication method. The method includes the following steps.

Step 300: The first network element sends a first message to the second network element. Correspondingly, the second network element receives the first message from the first network element.

The first message includes an analysis identifier, and the first message is used to request a model for providing a service corresponding to the analysis identifier.

For example, the first message may also be referred to as a model request message. For example, the first message may be a model provision subscription (Nnwdaf_MLModelProvision_Subscribe) message.

In a possible implementation, before the first network element sends the first message to the second network element, the first network element may receive a fourth message from a service consumer network element. The fourth message is used to request to the service corresponding to the analysis identifier, and the fourth message may include the analysis identifier. The service consumer network element may also be referred to as a fourth network element. A name of the service consumer network element is not limited in this application.

Step 310: The second network element sends a second message to the first network element. Correspondingly, the first network element receives the second message from the second network element.

For example, the second message may also be referred to as a model notification message. For example, the second message may be a model provision notification (Nnwdaf_MLModelProvision_Notify) message.

The second message includes one or more of a first identifier, information about M network elements, and information about a first model. The first identifier is associated with the analysis identifier, the first identifier corresponds to at least two vertical federated learning models, and users of the at least two vertical federated learning models include the M network elements, where M is a positive integer. The at least two vertical federated learning models corresponding to the first identifier include the first model.

For example, the first identifier may be understood as an identifier of a vertical federated task, or the first identifier is used to identify a vertical federated task. Each vertical federated task is associated with at least two vertical federated learning models, or it is understood that the at least two vertical federated learning models are obtained through a training phase of the vertical federated task. Therefore, the first identifier may correspond to the at least two vertical federated learning models, or it may be understood that although first identifiers are the same, vertical federated learning models identified by the first identifiers in different participants in the vertical federated task are different.

For example, users of the at least two vertical federated learning models may also be described as use devices of the at least two vertical federated learning models, or may be understood as entities that provide inference services (or inference results) by using the at least two vertical federated learning models, or entities that provide prediction services (or outputs) by using the at least two vertical federated learning models, or entities that provide the service corresponding to the analysis identifier by using the at least two vertical federated learning models, or entities that have a capability of using the at least two vertical federated learning models.

For example, the users of the at least two vertical federated learning models include the M network elements, and the M network elements may each provide an inference service by using respective corresponding vertical federated learning models. The M network elements are in one-to-one correspondence with M vertical federated learning models, and the at least two vertical federated learning models corresponding to the first identifier include the M vertical federated learning models.

For example, the users of the at least two vertical federated learning models include the M network elements, and each of the M network elements may provide an inference service by using at least one vertical federated learning model. That is, one network element may provide an inference service by using one or more vertical federated learning models.

For example, the information about the M network elements includes at least one of network entity identifiers of the M network elements, subscription correlation addresses of the M network elements, and role information of the M network elements.

For example, the information about the M network elements may be represented as a network element information list, and a tuple in the list includes one or more of a network entity identifier, a subscription correlation address, and role information.

A j^{th} network element is used as an example. The j^{th} network element is any one of the M network elements. Role information of the j^{th} network element indicates a role of a producer of a j^{th} vertical federated learning model in the vertical federated task corresponding to the first identifier. For example, the role herein is a primary participant, a secondary participant, or a coordinator.

The j^{th} network element is a user of the j^{th} vertical federated learning model, and the at least two vertical federated learning models corresponding to the first identifier include the j^{th} vertical federated learning model.

For example, there are at least two vertical federated learning models corresponding to the first identifier, and the first model is one of the at least two vertical federated learning models. The first model is a vertical federated learning model, or a type of the first model is a vertical federated learning model. The second network element provides the information about the first model for the first network element. The first network element may be understood as a user of the first model, that is, a user of the vertical federated learning model. The second network element may be a producer of the first model, and also a participant in the vertical federated task corresponding to the first identifier.

For example, the information about the first model may include an ML model file address (for example, a uniform resource locator (uniform resource locator, URL) or a fully qualified domain name (fully qualified domain name, FQDN)), or an analytics data repository functional (analytics data repository functional, ADRF) ID or an ADRF set (set) ID. When the ADRF ID or the ADRF set ID is included, the first information may further include a storage transaction identifier (storage transaction ID). Optionally, the information about the first model may include an identifier of the first model. In addition, the first information may further include other content. This is not limited in this application. It may be understood that some content included in the first information can be used to obtain the first model, and the first information further includes other content, for example, related information used to describe the first model, model accuracy information, and model applicable scenario information.

For example, the information about the first model includes a uniform resource locator (uniform resource locator, URL), and the first network element may obtain the first model based on the URL. Alternatively, the information about the first model may include the ADRF ID, the first network element may send a model obtaining request to an ADRF identified by the ADRF ID, and the ADRF may send the first model to the first network element.

For example, the first identifier and/or the information about the M network elements may be included in the information about the first model, or may be located outside the information about the first model. This is not limited in this application. For example, the information about the first model includes the model file address, the first identifier, and/or the information about the M network elements.

It may be understood that the information about the M network elements may be all or a part of user information of the at least two vertical federated learning models corresponding to the first identifier.

Example A: A total quantity of at least two vertical federated learning models corresponding to the first identifier is M. That is, in this case, M≥2. The information about the M network elements is all the user information of the at least two vertical federated learning models corresponding to the first identifier. That is, the M network elements may include the first network element.

Example B: A quantity of at least two vertical federated learning models corresponding to the first identifier is M+1, and the information about the M network elements is a part of the user information of the at least two vertical federated learning models corresponding to the first identifier. The M network elements do not include a network element using the first model, that is, do not include the first network element. Because the first network element is a network element using the first model, there may be no need to notify of information about the first network element again. That is, the M network elements may not include the first network element.

In this case, the first network element may obtain, based on the information about the M network elements and the information about the first network element, all the user information of the at least two vertical federated learning models corresponding to the first identifier.

In addition, in a possible implementation, the second message further includes information about N network elements, the N network elements are participants in the vertical federated learning task corresponding to the first identifier, or producers of the at least two vertical federated learning models corresponding to the first identifier. N is a positive integer.

For example, there are three vertical federated learning models corresponding to the first identifier, which are a model 1, a model 2, and a model 3. A network element 1 trains the model 1, a network element 2 trains the model 2, and a network element 3 trains the model 3. It may be understood that participants in the vertical federated task corresponding to the first identifier include the network element 1, the network element 2, and the network element 3. For example, the network element 1 and the network element 2 may be secondary participants in the vertical federated task corresponding to the first identifier, and the network element 3 may be a primary participant in the vertical federated task corresponding to the first identifier. Alternatively, producers of the three vertical federated learning models corresponding to the first identifier include the network element 1, the network element 2, and the network element 3.

The information about the N network elements includes information about the network element 1, information about the network element 2, and information about the network element 3.

In an example, a network element A is a user of the model 1, a network element B is a user of the model 2, and a network element C is a user of the model 3. That is, users of the three vertical federated learning models corresponding to the first identifier include the network element A, the network element B, and the network element C. The network element A, the network element B, and the network element C use different models.

The network element 1, the network element 2, the network element 3, the network element A, the network element B, and the network element C are different from each other. That is, a producer and a user of the model 1 are different network elements, a producer and a user of the model 2 are different network elements, and a producer and a user of the model 3 are different network elements.

With reference to Example A, the information about the M network elements includes information about the network element A, information about the network element B, and information about the network element C.

With reference to Example B, if the first network element is the network element A, the information about the M network elements includes the information about the network element B and the information about the network element C.

In another example, the network element A is a user of the model 1, the network element 2 is a user of the model 2, and the network element 3 is a user of the model 3. That is, users of the three vertical federated learning models corresponding to the first identifier include the network element A, the network element 2, and the network element 3.

The network element 1 is different from the network element A. That is, a producer and a user of the model 1 are different network elements, a producer and a user of the model 2 are a same network element, and a producer and a user of the model 3 are a same network element.

With reference to Example A, the information about the M network elements includes the information about the network element A, the information about the network element 2, and the information about the network element 3.

With reference to Example B, if the first network element is the network element A, the information about the M network elements includes the information about the network element 2 and the information about the network element 3.

The foregoing examples are merely examples, and there may be another example. This is not limited in this application.

For example, the second network element may determine the vertical federated task or the vertical federated learning model based on the analysis identifier. Further, obtaining related information of the vertical federated task or the vertical federated learning model specifically includes: obtaining the first identifier, the information about the first model, and the information about the M network elements.

For example, the second network element may determine at least one of the first identifier, the first model, and the information about the M network elements in the following manner:

First, the second network element may determine at least one model based on the analysis identifier, and the at least one model each can provide the service corresponding to the analysis identifier. The at least one model may include a common model (a non-vertical federated learning model) and a vertical federated learning model, or the at least one model may be a vertical federated learning model. There may also be one or more vertical federated learning models. In addition, if the second network element determines only the common model, refer to an existing procedure. Details are not described herein.

A specific process in which the second network element determines the vertical federated learning model may be as follows:

In a possible design, the second network element may determine the vertical federated learning model based on the analysis identifier. It can be learned from the foregoing related content of the vertical federated task that the analysis identifier is related to the vertical federated task. For example, the analysis identifier supports only the vertical federated task, and does not support another machine learning task (for example, analysis for generating a common model). Further, the second network element may determine, based on the analysis identifier, that the first model is the vertical federated learning model.

In another possible design, the second network element may first determine the first identifier based on the analysis identifier. It can be learned from the foregoing related content of the vertical federated task that the first identifier has an association relationship with the analysis identifier. Further, the second network element may determine, based on the first identifier, one of the vertical federated learning models corresponding to the vertical federated task, that is, the first model. It may be understood that the analysis identifier may have an association relationship with identifiers of one or more vertical federated tasks, so that the second network element can determine one or more vertical federated learning models.

Then, the second network element may determine one model from the at least one model in, but not limited to, the following manner.

For example, after training of a model is completed, the second network element may obtain performance information or a performance parameter of the model, for example, accuracy or an error. In addition, the first message may also include information that indicates a model performance requirement. Further, the second network element may determine, based on the information that indicates the model performance requirement in the first message and performance information separately corresponding to the at least one model, the model that satisfies the performance requirement from the at least one model. The information that indicates the model performance requirement may be provided by the service consumer network element. For example, before step 300, the service consumer network element may also provide, for the first network element by using the fourth message, the information that indicates the model performance requirement.

For example, the second network element may determine a common model A and a vertical federated learning model B based on the analysis identifier, and both the common model A and the vertical federated learning model B can provide the service corresponding to the analysis identifier. The first message further includes the information that indicates the model performance requirement. Further, the second network element may determine, based on performance information of the normal model A, performance information of the vertical federated learning model B, and the information that indicates the model performance requirement, that the normal model A does not satisfy the performance requirement and the vertical federated learning model B satisfies the performance requirement. That is, the second network element finally selects the vertical federated learning model B. That the vertical federated learning model B can provide the service corresponding to the analysis identifier may be understood as: The vertical federated learning model B and another vertical federated learning model that has a same vertical federated task identifier as the vertical federated learning model B may jointly provide the service corresponding to the analysis identifier. The vertical federated learning model B satisfies the performance requirement. That is, the vertical federated learning model B and another vertical federated learning model that has a same vertical federated task identifier as the vertical federated learning model B jointly satisfy the performance requirement.

It may be understood that if the at least one model includes the common model and the vertical federated learning model, the second network element may select the common model, or may select the vertical federated learning model. If the common model is selected, refer to an existing procedure. The second network element provides information about the common model for the first network element, and the first network element provides, by using the common model, the service corresponding to the analysis identifier for the service consumer network element. Details are not described herein again. The following uses an example in which the second network element selects the vertical federated learning model for description. The vertical federated learning model selected by the second network element is denoted as the first model.

Finally, after the second network element determines the first model, the second network element may further determine the information about the M network elements and/or the information about the N network elements. For example, the second network element has determined the first identifier in the foregoing process of determining the vertical federated learning model. With reference to the foregoing content related to the vertical federated task, it can be learned that the second network element may further determine participant information (that is, the information about the N network elements) of the vertical federated task and/or user information of the vertical federated learning model based on the first identifier. The information about the M network elements may be a part or all of the user information of the vertical federated learning model.

For example, after the training phase of the vertical federated task corresponding to the first identifier is completed, an i^{th} vertical federated learning model is used as an example. The i^{th} vertical federated learning model is any one of the at least two vertical federated learning models corresponding to the first identifier. A producer of the i^{th} vertical federated learning model or a user of the i^{th} vertical federated learning model may further send a notification message to the second network element. The notification message includes information about the producer of the i^{th} vertical federated learning model, and information about the user of the i^{th} vertical federated learning model. The producer of the i^{th} vertical federated learning model may also be understood as one of the participants in the vertical federated task corresponding to the first identifier.

That is, in the foregoing process, the second network element may obtain the user information of the at least two vertical federated learning models corresponding to the first identifier, and/or producer information of the at least two vertical federated learning models corresponding to the first identifier. The producer information of the at least two vertical federated learning models corresponding to the first identifier may also be described as participant information of the vertical federated task corresponding to the first identifier. In addition, the user information of the at least two vertical federated learning models corresponding to the first identifier and/or the producer information of the at least two vertical federated learning models corresponding to the first identifier may also be stored in the second network element in a preconfiguration manner.

In addition, in a possible implementation, the notification message may further include at least information about the i^{th} vertical federated learning model, for example, an identifier of the i^{th} vertical federated learning model. Alternatively, the second network element further stores identifiers corresponding to the at least two vertical federated learning models corresponding to the first identifier.

In a possible implementation, the first message may be alternatively replaced with the information about the M network elements and identifiers of M models. The M network elements are in one-to-one correspondence with the M models. The M models belong to the at least two vertical federated learning models corresponding to the first identifier.

For example, the j^{th} network element is used as an example. The j^{th} network element is any one of the M network elements, and the j^{th} network element is a user of the j^{th} vertical federated learning model. The first network element may send an identifier of the j^{th} vertical federated learning model to the j^{th} network element, so that the j^{th} network element calculates an intermediate result based on the j^{th} vertical federated learning model.

In another possible implementation, the first message may be alternatively replaced with the information about the M network elements and identifiers of K models. The M network elements have a correspondence with the K models. The K models belong to the at least two vertical federated learning models corresponding to the first identifier.

In a possible implementation, the second message may further include first indication information, and the first indication information indicates that the model for providing the service corresponding to the analysis identifier is a vertical federated learning model. Alternatively, the first indication information indicates that the first model is a vertical federated learning model, or the first indication information indicates that a model corresponding to the first identifier is a vertical federated learning model, or the first indication information indicates that a task corresponding to the first identifier is a vertical federated task.

Further, the first network element may determine, based on the first indication information, that the type of the first model is a vertical federated learning model. In addition, the first indication information is optional information. Because the second message includes the information about the M network elements, the first network element may also determine, based on the information about the M network elements, that the type of the first model is a vertical federated learning model.

Further, optionally, step 320: The first network element sends the first identifier to at least one of the M network elements. For example, the first network element sends a third message to at least one of the M network elements. The third message is used to request the vertical federated learning models corresponding to the first identifier to provide a service. For example, the first identifier may be carried in an analysis subscription request message, a (vertical federated learning) prediction request message, or prediction request message a vertical federated learning model. A network element receiving the message may determine, based on the first identifier, a vertical federated learning model that can be used by the network element, and then calculate an intermediate result based on the vertical federated learning model.

For example, the first network element determines the at least one network element based on the information about the M network elements, and sends the third message to the at least one network element.

For example, with reference to the information about the M network elements, the first network element may determine the at least one network element based on the information about the M network elements in the following several cases:

With reference to Example A, there are a total of M vertical federated learning models corresponding to the first identifier, and the M network elements are all users of the vertical federated learning models corresponding to the first identifier. In this case, the first network element may determine information about M-1 network elements based on the information about the M network elements. The M-1 network elements do not include the first network element. Further, the first network element may separately send the third message to the M-1 network elements.

With reference to Example B, there are a total of M+1 vertical federated learning models corresponding to the first identifier, and the M network elements are a part of the users of the vertical federated learning models corresponding to the first identifier. The M network elements do not include the first network element, and the first network element may separately send the third message to the M network elements.

With reference to step 300, it can be learned that, before the first network element sends the first message to the second network element, the first network element receives the fourth message from the service consumer network element, where the fourth message includes the analysis identifier and information about a first object, and the first object is an analysis object corresponding to the analysis identifier. The fourth message is used to request to the service corresponding to the analysis identifier.

For example, the first object may also be referred to as target UE (target UE). For example, the fourth message includes an analysis identifier 1 and/or an SUPI of UE 1. The analysis identifier 1 identifies a mobility service of the UE, and the first object is the UE 1, and the fourth message is used to request to analyze mobility of the UE 1.

The information about the first object includes a network entity identifier of the first object or a user entity identifier of the first object. For example, the user entity identifier is a subscription permanent identifier (subscription permanent identifier, SUPI).

In a possible implementation, the third message further includes an identifier of the first object in the at least two vertical federated learning models corresponding to the first identifier, which may also be described as an identifier of the first object in the vertical federated task corresponding to the first identifier.

In a possible design, the second message further indicates or includes a first mapping relationship, and the first mapping relationship is a mapping relationship between the first object and an object for the first object in the vertical federated task corresponding to the first identifier. It may be understood that the first mapping relationship is a mapping relationship between an identifier of the first object and the identifier of the first object in the vertical federated task corresponding to the first identifier. The first network element determines, based on the identifier of the first object and the first mapping relationship, the identifier of the first object in the vertical federated task corresponding to the first identifier.

In a possible design, the second message further indicates or includes a first mapping relationship and/or a second mapping relationship, the first mapping relationship is between a network entity identifier and an identifier in the vertical federated task corresponding to the first identifier, and the second mapping relationship is between a user entity identifier and an identifier in the vertical federated task corresponding to the first identifier. It may be understood that the first mapping relationship is a relationship between a network entity identifier and an identifier in the vertical federated task corresponding to the first identifier, and the second mapping relationship is a relationship between a user entity identifier and an identifier in the vertical federated task corresponding to the first identifier.

In an example, the second message may further indicate or include the first mapping relationship, and the first mapping relationship is an identifier of a network entity identifier in the at least two vertical federated learning models corresponding to the first identifier, or an identifier of the network entity identifier in the vertical federated task corresponding to the first identifier. For example, the first mapping relationship may be implemented in the following manner: (NF ID, VFL ID).

For example, the first network element first obtains the network entity identifier of the first object. For example, the network entity identifier of the first object may be provided by the service consumer network element. For example, before step 300, the service consumer network element may also provide the network entity identifier of the first object for the first network element by using the fourth message. Further, the first network element determines, based on the network entity identifier of the first object and the first mapping relationship, the identifier of the first object in the at least two vertical federated learning models corresponding to the first identifier. In this case, the first object may be a network entity. For example, the first network element queries the first mapping relationship based on an NF ID of the first object, and determines a VFL ID of the first object.

In another example, the second message may further indicate the second mapping relationship, and the second mapping relationship is an identifier of a user entity identifier in the at least two vertical federated learning models corresponding to the first identifier. For example, the second mapping relationship may be implemented in the following manner: (SUPI, VFL ID), or (UE ID, UE VFL ID).

For example, the first network element first obtains the user entity identifier of the first object. For example, the user entity identifier of the first object may be provided by the service consumer network element. For example, before step 300, the service consumer network element may also provide the user entity identifier of the first object for the first network element by using the fourth message. Further, the first network element determines the identifier of the first object in the vertical federated learning model based on the user entity identifier of the first object and the second mapping relationship. In this case, the first object may be a terminal device, for example, UE. For example, the first network element queries the second mapping relationship based on an SUPI of the first object, and determines a VFL ID of the first object. Alternatively, the first network element queries the second mapping relationship based on a UE ID of the first object, and determines a UE VFL ID of the first object.

In another possible implementation, the third message further includes the information about the first object,
for example, the network entity identifier of the first object or the user entity identifier of the first object. If the third message further includes the network entity identifier of the first object, a network element that receives the network entity identifier of the first object may determine the identifier of the first object in the vertical federated learning model based on the first mapping relationship and the network entity identifier of the first object. Alternatively, if the third message further includes the user entity identifier of the first object, a network element that receives the user entity identifier of the first object may determine the identifier of the first object in the vertical federated learning model based on the second mapping relationship and the user entity identifier of the first object.

Further, after the first network element sends the third message to the at least one network element, in a possible implementation, the first network element obtains a first intermediate result based on the first model; the first network element receives at least one intermediate result from the at least one network element, where the at least one network element is in one-to-one correspondence with the at least one intermediate result; and the first network element determines an output based on the first intermediate result and the at least one intermediate result. In another possible implementation, the first network element obtains a first intermediate result based on the first model; the first network element sends the first intermediate result to a third network element, where the third network element is one of the at least one network element; and the first network element receives an output from the third network element.

The first network element may obtain the output in the following several possible manners based on different roles of the producer of the first model.

In the following, the producer of the first model is a primary participant or a secondary participant in the vertical federated task corresponding to the first identifier. For ease of description, the producer of the first model is referred to as a primary participant or a secondary participant in the following. That the producer of the first model is a primary participant (or a secondary participant) may alternatively be described as: The model (that is, the first model) obtained by the first network element is a model generated by the primary participant (or the secondary participant) in the vertical federated task corresponding to the first identifier, or the second network element is a primary participant (or a secondary participant) in the vertical federated task corresponding to the first identifier. The following uses an example in which the third message includes the first identifier and the identifier (referred to as the VFL ID of the first object for short) of the first object in the at least two vertical federated learning models corresponding to the first identifier for description.

Manner 1: The producer of the first model is a primary participant.

For example, with reference to Example A, the information about the M network elements includes the information about the first network element and information about other M-1 network elements, the information about the first network element includes role information of the first network element, and the role information of the first network element indicates that the producer of the first model is a primary participant. Alternatively, with reference to Example B, the information about the M network elements does not include the information about the first network element, the information about the M network elements includes role information of the M network elements, the role information of the M network elements may be one piece of information or M pieces of information, and the role information of the M network elements indicates that producers of models used by the M network elements are all secondary participants in the vertical federated task corresponding to the first identifier. The producers of models used by the M network elements are referred to as secondary participants for short below. In this case, the first network element determines, based on the role information of the M network elements, that the producer of the first model is a primary participant.

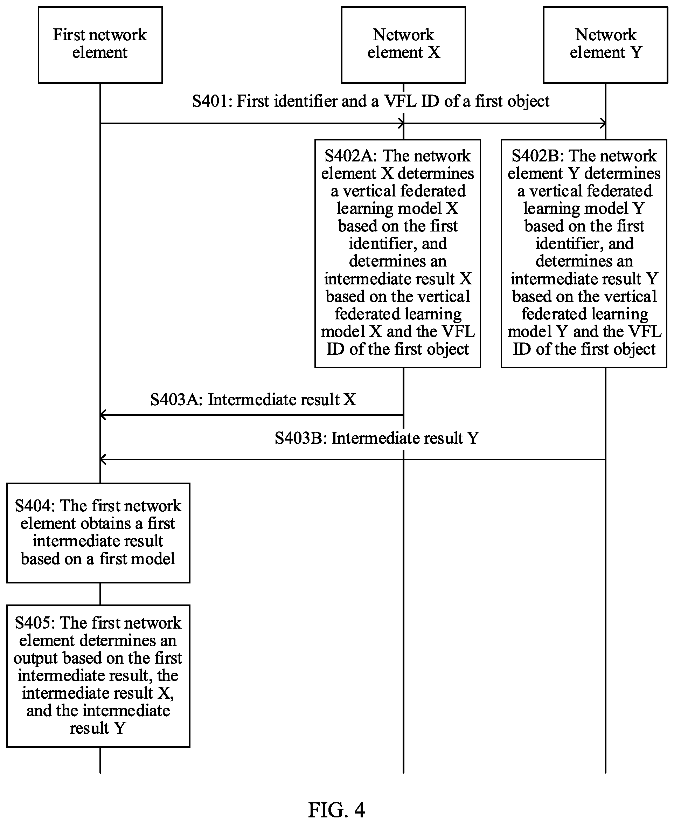

For example, the first network element determines the at least one network element based on the information about the M network elements, and separately sends the third message to the at least one network element. The third message includes the first identifier and the identifier of the first object in the at least two vertical federated learning models corresponding to the first identifier, which is referred to as a VFL ID of the first object for short below. For example, with reference to Example A, a quantity of at least one network element is M-1, and with reference to Example B, a quantity of at least one network element is M. A network element that receives the first identifier and the VFL ID of the first object may determine a corresponding vertical federated learning model based on the first identifier, and calculate a corresponding intermediate result based on the VFL ID of the first object and the determined vertical federated learning model. Each of the at least one network element determines one intermediate result. The at least one network element separately sends a corresponding intermediate result to the first network element. That is, the first network element receives at least one intermediate result from the at least one network element, and the at least one network element is in one-to-one correspondence with the at least one intermediate result. The first network element further obtains the first intermediate result based on the first model. Further, the first network element determines the output based on the first intermediate result and the received at least one intermediate result. The following describes the foregoing process by using an example with reference to FIG. 4.

In FIG. 4, a quantity of at least one network element is 2, the at least one network element is a network element X and a network element Y, the network element X is a user of a vertical federated learning model X, the network element Y is a user of the vertical federated learning model Y, and both a producer of the vertical federated learning model X and a producer of the vertical federated learning model Y are secondary participants.

S401: The first network element separately sends the first identifier and the VFL ID of the first object to the network element X and the network element Y.

S402A: The network element X determines the vertical federated learning model X based on the first identifier, and determines an intermediate result X based on the vertical federated learning model X and the VFL ID of the first object.

S402B. The network element Y determines the vertical federated learning model Y based on the first identifier, and determines an intermediate result Y based on the vertical federated learning model Y and the VFL ID of the first object.

S403A: The network element X sends the intermediate result X to the first network element.

S403B: The network element Y sends the intermediate result Y to the first network element.

S404: The first network element obtains the first intermediate result based on the first model.

For example, the first network element calculates the first intermediate result based on the VFL ID of the first object and the first model. A sequence of S404, S401, S402A, S402B, S403A, and S403B is not limited in this application.

S405: The first network element determines an output based on the first intermediate result, the intermediate result X, and the intermediate result Y.

Manner 2: The producer of the first model is a secondary participant.

The producer of the first model is a secondary participant, and a producer of a model used by the third network element is a primary participant.

For example, with reference to Example A, if M=2, the information about the M network elements includes the information about the first network element and information about the third network element. If M>2, the information about the M network elements includes the information about the first network element, the information about the third network element, and the information about the other M-2 network elements. The information about the first network element includes role information of the first network element, and the role information of the first network element indicates that the producer of the first model is a secondary participant. The information about the third network element includes role information of the third network element, and the role information of the third network element indicates that the producer of the model used by the third network element is a primary participant. With reference to Example B, the information about the M network elements does not include the information about the first network element. If M=2, the information about the M network elements includes the information about the third network element. If M>2, the information about the M network elements includes the information about the third network element and information about other M-2 network elements. The information about the third network element includes the role information of the third network element, and the role information of the third network element indicates that the producer of the model used by the third network element is a primary participant. Further, the first network element may determine, based on the information about the third network element, that the producer of the first model is a secondary participant.

For example, the first network element determines the at least one network element based on the information about the M network elements, and separately sends the third message to the at least one network element. The third message includes the first identifier and the VFL ID of the first object. For example, with reference to Example A, a quantity of at least one network element is M-1, and with reference to Example B, a quantity of at least one network element is M. A network element that receives the first identifier and the VFL ID of the first object may determine a corresponding vertical federated learning model based on the first identifier, and calculate an intermediate result based on the VFL ID of the first object and the determined vertical federated learning model. Each of the at least one network element determines one intermediate result.

Next, the following two possible implementations may be included:
Possible implementation a: A network element other than the third network element in the at least one network element sends a corresponding intermediate result to the first network element. That is, the first network element receives the intermediate result from the network element other than the third network element in the at least one network element. The first network element further obtains the first intermediate result based on the first model, and further sends the first intermediate result and the received intermediate result to the third network element. The third network element may determine an output based on the intermediate result received from the first network element and the intermediate result calculated by the third network element, and send the output to the first network element.

Possible implementation b: A network element other than the third network element in the at least one network element sends a corresponding intermediate result to the third network element. The first network element further obtains the first intermediate result based on the first model, and further sends the first intermediate result to the third network element. The third network element may determine an output based on an intermediate result from a network element other than the third network element in the at least one network element, the first intermediate result, and an intermediate result calculated by the third network element, and send the output to the first network element.

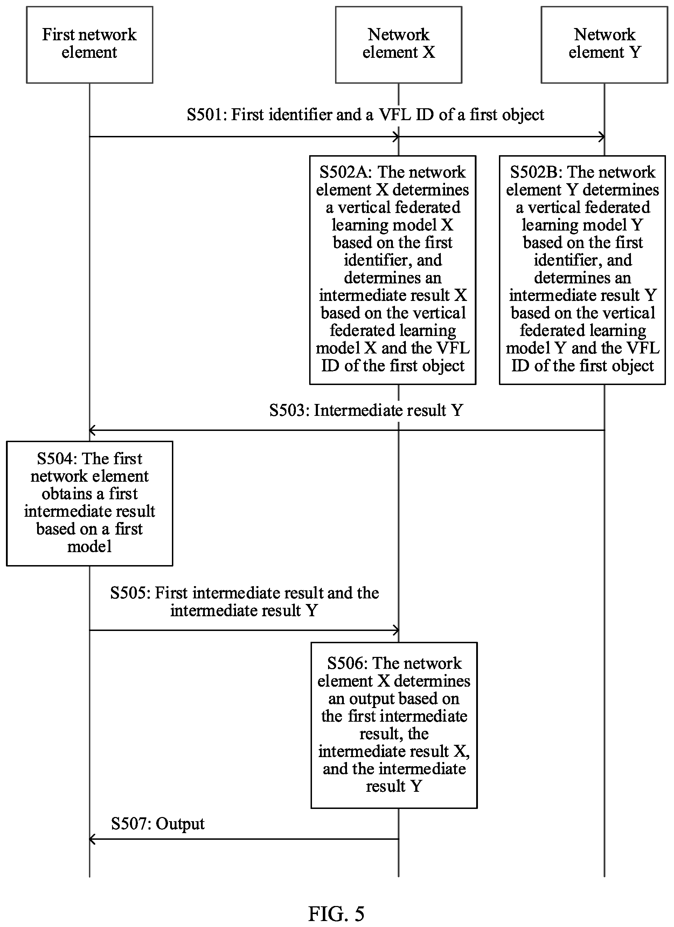

The following describes the foregoing process by using an example with reference to FIG. 5.

In FIG. 5, a quantity of at least one network element is 2, the at least one network element is a network element X and a network element Y, the network element X is a user of a vertical federated learning model X, the network element Y is a user of the vertical federated learning model Y, a producer of the vertical federated learning model X is a primary participant, and a producer of the vertical federated learning model Y is a secondary participant.

S501: The first network element separately sends the first identifier and the VFL ID of the first object to the network element X and the network element X.

S502A: The network element X determines the vertical federated learning model X based on the first identifier, and determines an intermediate result X based on the vertical federated learning model X and the VFL ID of the first object.

S502B: The network element Y determines the vertical federated learning model Y based on the first identifier, and determines an intermediate result Y based on the vertical federated learning model Y and the VFL ID of the first object.

S503: The network element Y sends the intermediate result Y to the first network element.

S504: The first network element obtains the first intermediate result based on the first model.

A sequence of S504 relative to S501, S502A, S502B, and S503 is not limited in this application.

S505: The first network element sends the first intermediate result and the intermediate result Y to the network element X.

Alternatively, S503 may be replaced with: The network element Y sends the intermediate result Y to the network element X. In addition, S505 may be replaced with: The first network element sends the first intermediate result to the network element X.

S506: The network element X determines an output based on the first intermediate result, the intermediate result X, and the intermediate result Y.

S507: The network element X sends the output to the first network element.

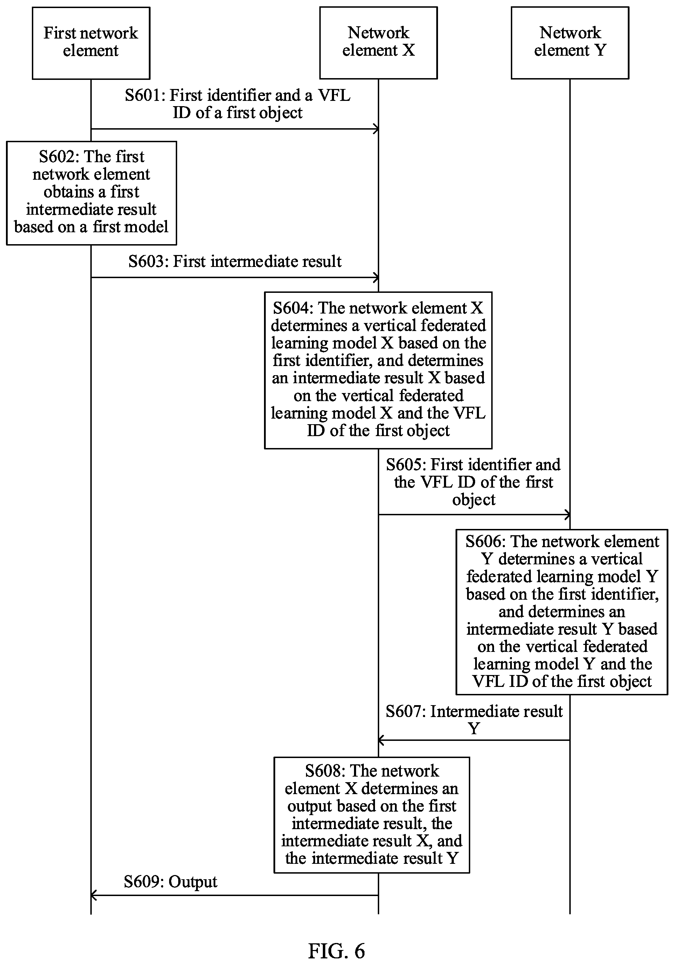

In an optional embodiment, a quantity of vertical federated learning models corresponding to the first identifier is greater than 2, the producer of the first model is a secondary participant, and the information about the M network elements includes only information about the third network element, that is, M=1. The information about the third network element includes role information of the third network element, and the role information of the third network element indicates that the producer of the model used by the third network element is a primary participant. That is, in addition to the first network element and the third network element, there is at least one other network element, and a producer of a model used by the at least one other network element is a secondary participant. The first network element may determine, based on the information about the third network element, that the producer of the first model is a secondary participant. In this case, the third network element learns only the information about the third network element and the information about the third network element, but the first network element does not obtain information about the at least one other network element. In this case, the third network element may initiate to collect an intermediate result of the at least one other network element and provide an output. The following describes the foregoing process by using an example with reference to FIG. 6.

In FIG. 6, a quantity of vertical federated learning models corresponding to the first identifier is 3. A network element X is a user of a vertical federated learning model X, a network element Y is a user of a vertical federated learning model Y, a producer of the vertical federated learning model X is a primary participant, and a producer of the vertical federated learning model Y is a secondary participant.

S601: The first network element sends the first identifier and the VFL ID of the first object to the network element X.

S602: The first network element obtains the first intermediate result based on the first model.

S603: The first network element sends the first intermediate result to the network element X.

It may be understood that the first network element may further use one message to carry the first intermediate result, the first identifier, and the VFL ID of the first object.

S602 and S603 may be performed before or after S601. This is not limited in this application.

S604: The network element X determines the vertical federated learning model X based on the first identifier, and determines an intermediate result X based on the vertical federated learning model X and the VFL ID of the first object.

S605: The network element X determines that an intermediate result of the network element Y is not obtained, and sends the first identifier and the VFL ID of the first object to the network element Y.

For example, the network element X determines, based on the first identifier, information about all users of the vertical federated learning models corresponding to the first identifier, and all the users of the vertical federated learning models corresponding to the first identifier include the first network element, the network element X, and the network element Y. Further, the network element X determines, based on the obtained intermediate result, that the intermediate result of the network element Y is not obtained.

S606: The network element Y determines the vertical federated learning model Y based on the first identifier, and determines an intermediate result Y based on the vertical federated learning model Y and the VFL ID of the first object.

S607: The network element Y sends the intermediate result Y to the network element X.

S608: The network element X determines an output based on the first intermediate result, the intermediate result X, and the intermediate result Y.

S609: The network element X sends the output to the first network element.

In addition, for the manner 1 and manner 2, the network element that uses the model as a primary participant may also determine, based on the first identifier, information about all users of the vertical federated learning model corresponding to the first identifier, and determine, based on obtained intermediate results, whether all intermediate results have been obtained. Details are not described herein again.

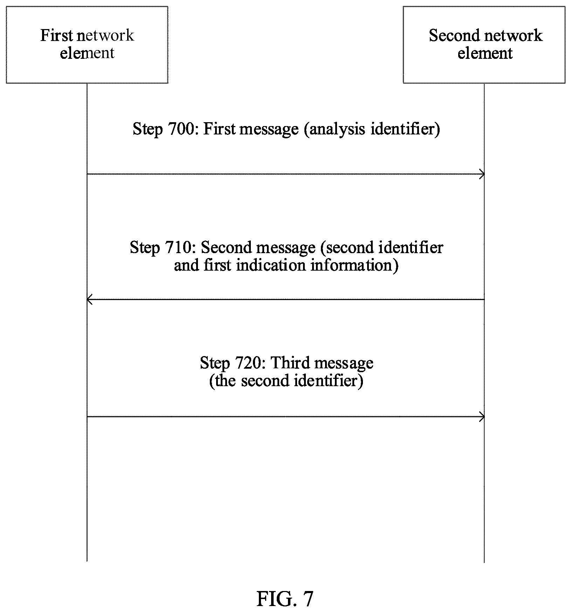

As shown in FIG. 7, this application further provides a communication method. The method includes the following steps.

Step 700: A first network element sends a first message to a second network element. Correspondingly, the second network element receives the first message from the first network element.

The first message includes an analysis identifier, and the first message is used to request a model for providing a service corresponding to the analysis identifier.

For example, the first message may also be referred to as a model request message.

In a possible implementation, before the first network element sends the first message to the second network element, the first network element may receive a fourth message from a service consumer network element. The fourth message is used to request to the service corresponding to the analysis identifier, and the fourth message may include the analysis identifier. For other related content of the fourth message, refer to the embodiment shown in FIG. 3.

Step 710: The second network element sends a second message to the first network element. Correspondingly, the first network element receives the second message from the second network element.

For example, the second message may also be referred to as a model notification message.

The second message includes a second identifier and/or first indication information, the second identifier is used to identify the first message, and the first indication information indicates that the model for providing the service corresponding to the analysis identifier is a vertical federated learning model. Further, the first network element may determine, based on the first indication information, that the model for providing the service corresponding to the analysis identifier is a vertical federated learning model.

For example, the second identifier may be a subscription correlation identifier (subscription correlation ID). The second identifier is associated with subscription of the vertical federated learning model, and is used to identify model subscription between the second network element and the first network element. In addition, the second network element stores a correspondence between the second identifier and the vertical federated learning model.

For example, before the second network element sends the second message to the first network element, that is, before step 710, the second network element may determine, based on the analysis identifier, to provide the service corresponding to the analysis identifier by using a first model. The first model is a vertical federated learning model. Further, the second network element stores a correspondence between the second identifier and information about the first model, so that after receiving the second identifier, the second network element determines the information about the first model based on the second identifier. For the information about the first model, refer to related descriptions in the embodiment shown in FIG. 3.

When the second network element determines the information about the first model based on the analysis identifier, the second network element may further determine information about M network elements and/or a first identifier based on the analysis identifier.

When the second network element stores the correspondence between the second identifier and the information about the first model, the second network element stores a correspondence between the second identifier and the information about the first model, the information about the M network elements, and the first identifier; or a correspondence between the second identifier and the information about the first model and the information about the M network elements; or a correspondence between the second identifier and the information about the first model and the first identifier; or the like.

The first identifier is associated with the analysis identifier, and the first identifier corresponds to at least two vertical federated learning models. Users of the at least two vertical federated learning models include the M network elements, M is a positive integer, and the at least two vertical federated learning models include the first model. For details, refer to related descriptions in the embodiment shown in FIG. 3.

For a specific process of determining the first model by the second network element, refer to related descriptions of determining, by the second network element, at least one of the first identifier, the first model, and the information about the M network elements in the embodiment shown in FIG. 3. Details are not described herein again.

Step 720: The first network element sends a third message to the second network element, where the third message is used to request the service corresponding to the analysis identifier, and the third message includes the second identifier.

For example, the third message may further include an identifier of a first object in the at least two vertical federated learning models corresponding to the first identifier, or information about the first object, for example, a network entity identifier or a user entity identifier of the first object. For a specific possible implementation, refer to related content in the embodiment shown in FIG. 3. Details are not described herein again.

For example, the second network element determines the information about the first model based on the second identifier. The second network element uses the first model, and provides the service corresponding to the analysis identifier for the first network element.

Therefore, in this embodiment, the second network element does not provide information about a model for the first network element, but uses the first indication information to notify the first network element that the model for providing the service corresponding to the analysis identifier is a vertical federated learning model. The second network element may use the second identifier to request the service corresponding to the analysis identifier.

Further, the first network element may further receive an output from the second network element, and the first network element may further send the output to a service consumer network element.

For example, if the second network element stores the correspondence between the second identifier and the information about the first model, the information about the M network elements, and the first identifier, after the second network element receives the third message, the second network element may determine at least one of the information about the first model, the information about the M network elements, and the first identifier based on the second identifier in the third message. Further, with reference to at least one of the information about the first model, the information about the M network elements, and the first identifier, the second network element may further obtain an output.

In a possible design, after the second network element receives the third message from the first network element, the second network element determines the information about the first model, the information about the M network elements, and the first identifier based on the second identifier. The second network element determines at least one network element based on the information about the M network elements, and the second network element sends a fifth message to the at least one network element. The fifth message includes the first identifier, and the fifth message is used to request the vertical federated learning models corresponding to the first identifier to provide a service. The second network element obtains a first intermediate result based on the first model and receives at least one intermediate result from the at least one network element, and the at least one network element is in one-to-one correspondence with the at least one intermediate result. The second network element determines the output based on the first intermediate result and the at least one intermediate result.

In a possible design, after the second network element receives the third message from the first network element, the second network element determines the information about the first model, the information about the M network elements, and the first identifier based on the second identifier. The second network element determines at least one network element based on the information about the M network elements, and sends a fifth message to the at least one network element. The fifth message includes the first identifier, and the third message is used to request the vertical federated learning models corresponding to the first identifier to provide a service. The second network element obtains a first intermediate result based on the first model, sends the first intermediate result to a third network element, and receives an output from the third network element.

The fifth message may further include the identifier of the first object in the at least two vertical federated learning models corresponding to the first identifier, or information about the first object, for example, the network entity identifier or the user entity identifier of the first object. For a specific possible implementation, refer to related content in the embodiment shown in FIG. 3. Details are not described herein again. The following uses an example in which the fifth message includes the first identifier and a VFL ID of the first object for description.

For example, according to different roles of the second network element, the second network element may obtain the output in the following manner A and manner B:
Manner A: A role of the second network element is a primary participant.

For example, the second network element may learn the information about the M network elements. Specifically, the second network element may determine all user information of the vertical federated learning models corresponding to the first identifier. Therefore, the second network element may learn of a role of the second network element and a role of a producer of a model used by another user in a vertical federated task corresponding to the first identifier. The second network element may determine information about the at least one network element based on the information about the M network elements. For example, the information about the at least one network element is user information other than the second network element in all users of the vertical federated learning models corresponding to the first identifier.

For example, the second network element sends the fifth message to the at least one network element. The fifth message includes the first identifier and the VFL ID of the first object. A network element that receives the first identifier and the VFL ID of the first object may determine a corresponding vertical federated learning model based on the first identifier, and calculate a corresponding intermediate result based on the VFL ID of the first object and the determined vertical federated learning model. Each of the at least one network element determines one intermediate result. The at least one network element separately sends a corresponding intermediate result to the second network element. That is, the second network element receives at least one intermediate result from the at least one network element, and the at least one network element is in one-to-one correspondence with the at least one intermediate result. The second network element further obtains the first intermediate result based on the first model. Further, the second network element determines the output based on the first intermediate result and the received at least one intermediate result.

For the manner A, refer to the embodiment shown in FIG. 4. The first network element in the embodiment shown in FIG. 4 may be replaced with the second network element.

Manner B: A role of the second network element is a secondary participant.

The role of the second network element is a secondary participant, and a role of a producer of a model used by the third network element is a primary participant.

For example, the second network element may learn the information about the M network elements. Specifically, the second network element may determine all user information of the vertical federated learning models corresponding to the first identifier. Therefore, the second network element may learn of a role of the second network element and a role of a producer of a model used by another user in a vertical federated task corresponding to the first identifier. The second network element may determine information about the at least one network element based on the information about the M network elements. For example, the information about the at least one network element is user information other than the second network element in all users of the vertical federated learning models corresponding to the first identifier.

For example, the second network element sends the first identifier and the VFL ID of the first object to the at least one network element. A network element that receives the first identifier and the VFL ID of the first object may determine a corresponding vertical federated learning model based on the first identifier, and calculate an intermediate result based on the VFL ID of the first object and the determined vertical federated learning model. Each of the at least one network element determines one intermediate result. A network element other than the third network element in the at least one network element sends a corresponding intermediate result to the second network element. That is, the second network element receives the intermediate result from the network element other than the third network element in the at least one network element. The second network element further obtains the first intermediate result based on the first model, and further sends the first intermediate result and the received intermediate result to the third network element. The third network element may determine an output based on the intermediate result received from the second network element and the intermediate result calculated by the third network element, and send the output to the second network element.

For the manner B, refer to the embodiment shown in FIG. 5. The first network element in the embodiment shown in FIG. 5 may be replaced with the second network element.

In addition, in a possible implementation, the second message includes a model subscription address and first indication information. The first network element may send the third message to the address. The address is an address of the second network element. The second network element stores a correspondence between the address and the information about the first model. The second network element determines the information about the first model based on the address in the third message. The second network element uses the first model, and provides the service corresponding to the analysis identifier for the first network element. For example, a function of the model subscription address is similar to that of the second identifier. For details, refer to the foregoing related descriptions.

In the following description, an example in which the first network element is a first AnLF and the second network element is a first MTLF is used for description.

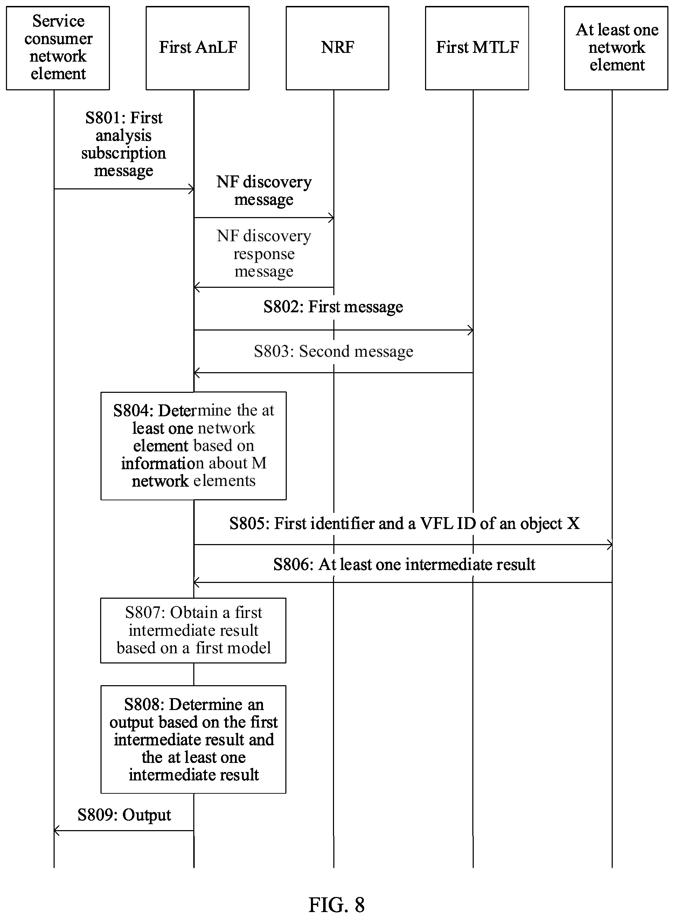

An embodiment shown in FIG. 8 is further described by using an example with respect to the embodiment shown in FIG. 3.

S801: A service consumer network element sends a first analysis subscription message to the first AnLF. The first analysis subscription message includes an analysis identifier, and an SUPI or an NF ID of an object X. Optionally, the first analysis subscription message further includes information that indicates a model performance requirement.

For example, the service consumer network element requests, by using the first analysis subscription message, the first AnLF to provide a service corresponding to the analysis identifier for the first AnLF. For example, the service consumer network element may be an AMF, an SMF, or another core network element.

For example, for the first analysis subscription message, refer to the foregoing related description about the fourth message.

S802: The first AnLF sends a first message to the first MTLF. The first message includes the analysis identifier.

In a possible implementation, the first AnLF may determine the first MTLF through a network element discovery procedure. For example, the first AnLF sends an NF discovery message to an NRF. The NF discovery message includes the analysis identifier. For example, the NF discovery message may be Nnrf_NF Discovery. The NF discovery message is used to discover an MTLF, or is used to discover an NWDAF including the MTLF. The NRF determines the first MTLF based on the analysis identifier in the NF discovery message. The NRF sends an NF discovery response message to the first AnLF. The NF discovery response message includes information about the first MTLF, and the information about the first MTLF may include an identifier of the first MTLF, the analysis identifier, and the like. For example, the information about the first MTLF is NF profile (profile) of the first MTLF.

It may be understood that the NRF may determine one or more MTLFs based on the analysis identifier in the NF discovery message. In this case, the NF discovery response message may include information about the one or more MTLFs. The first MTLF may be understood as any one of the one or more MTLFs. The following uses only the first MTLF as an example for description.

S803: The first MTLF sends a second message to the first AnLF.

The second message includes at least one of information about a first model, information about M network elements, and a first identifier.

For example, the first MTLF determines at least one of the information about the first model, the information about the M network elements, and the first identifier based on the analysis identifier in the model request message. For details, refer to related content in the embodiment shown in FIG. 3. Details are not described herein again.

Optionally, the second message may further include a first mapping relationship and/or a second mapping relationship.

S804: The first AnLF determines at least one network element based on the information about the M network elements.

S805: The first AnLF separately sends the first identifier and a VFL ID of the object X to the at least one network element.

Optionally, the first AnLF determines the VFL ID of the object X based on the SUPI or the NF ID of the object X in the first analysis subscription message and the first mapping relationship and/or the second mapping relationship included in the second message.

The following uses only an example in which a role of a producer of the first model is a primary participant for description, and does not constitute a limitation on this application.

S806: The at least one network element sends at least one intermediate result to the first AnLF, where the at least one intermediate result is in one-to-one correspondence with the at least one network element.

S807: The first AnLF obtains a first intermediate result based on the first model.

For example, the first AnLF calculates the first intermediate result based on the VFL ID of the object X and the first model.

S808: The first AnLF determines an output based on the first intermediate result and the at least one intermediate result.

S809: The first AnLF sends the output to the service consumer network element.

According to the foregoing method, the first AnLF may obtain at least one of the information about the first model, the information about the M network elements, and the first identifier from the first MTLF, and execute an analysis task together with at least one of the M network elements by using a vertical federated learning model.

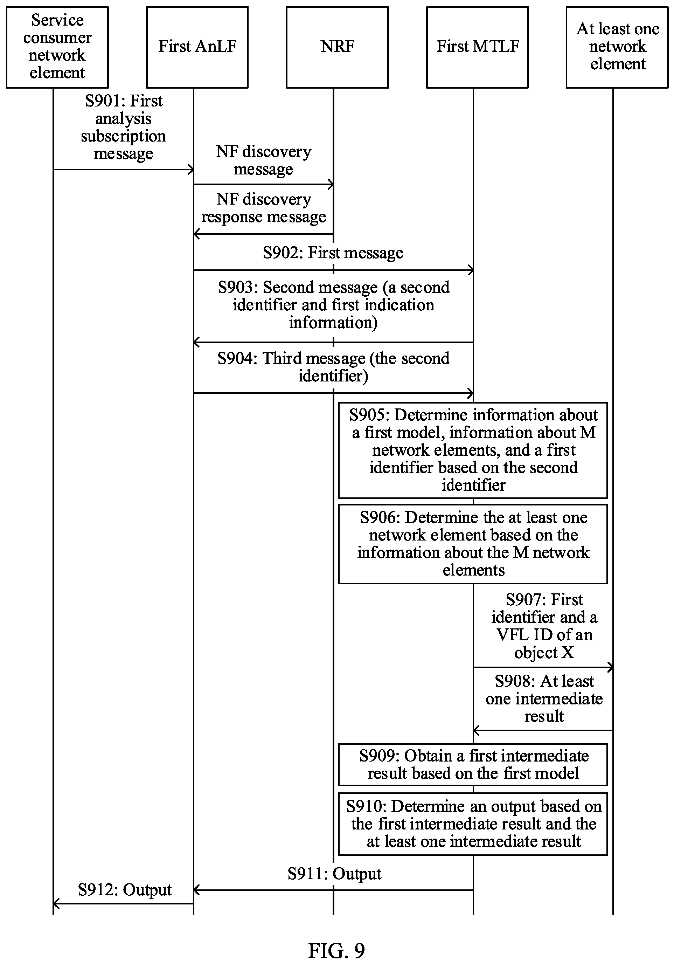

An embodiment shown in FIG. 9 is further described by using an example with respect to the embodiment shown in FIG. 7.

For S901 and S902, refer to S801 and S802.

S903: The first MTLF sends a second message to the first AnLF.

The second message includes a second identifier and/or first indication information.

For example, the first MTLF determines at least one of information about a first model, information about M network elements, and a first identifier based on an analysis identifier in a model request message. For details, refer to related content in the embodiment shown in FIG. 3. The first MTLF stores a correspondence between the second identifier and the information about the first model.

Optionally, the second message may further include a first mapping relationship and/or a second mapping relationship.

S904: The first AnLF sends a third message to the first MTLF.

The third message includes a VFL ID of an object X and the second identifier.

Optionally, the first AnLF determines the VFL ID of the object X based on an SUPI or an NF ID of the object X in the first analysis subscription message and the first mapping relationship and/or the second mapping relationship included in the second message.

S905: The first MTLF determines at least one of the information about the first model, the information about the M network elements, and the first identifier based on the second identifier.

S906: The first MTLF determines at least one network element based on the information about the M network elements.

S907: The first MTLF separately sends the first identifier and the VFL ID of the object X to the at least one network element.

The following uses only an example in which a role of the first MTLF is a primary participant for description, and does not constitute a limitation on this application.

S908: The at least one network element sends at least one intermediate result to the first MTLF, where the at least one intermediate result is in one-to-one correspondence with the at least one network element.

S909: The first MTLF obtains a first intermediate result based on the first model.

For example, the first MTLF calculates the first intermediate result based on the VFL ID of the object X and the first model.

S910: The first MTLF determines an output based on the first intermediate result and the at least one intermediate result.

S911: The first MTLF sends the output to the first AnLF.

S912: The first AnLF sends the output to the service consumer network element.

In the foregoing method, the first AnLF does not obtain information about a model from the first MTLF, but may determine, by using the obtained first indication information, to use a vertical federated learning model, and request, by using the second identifier, a service corresponding to the analysis identifier. The first MTLF executes an analysis task together with at least one of the M network elements by using the vertical federated learning model.

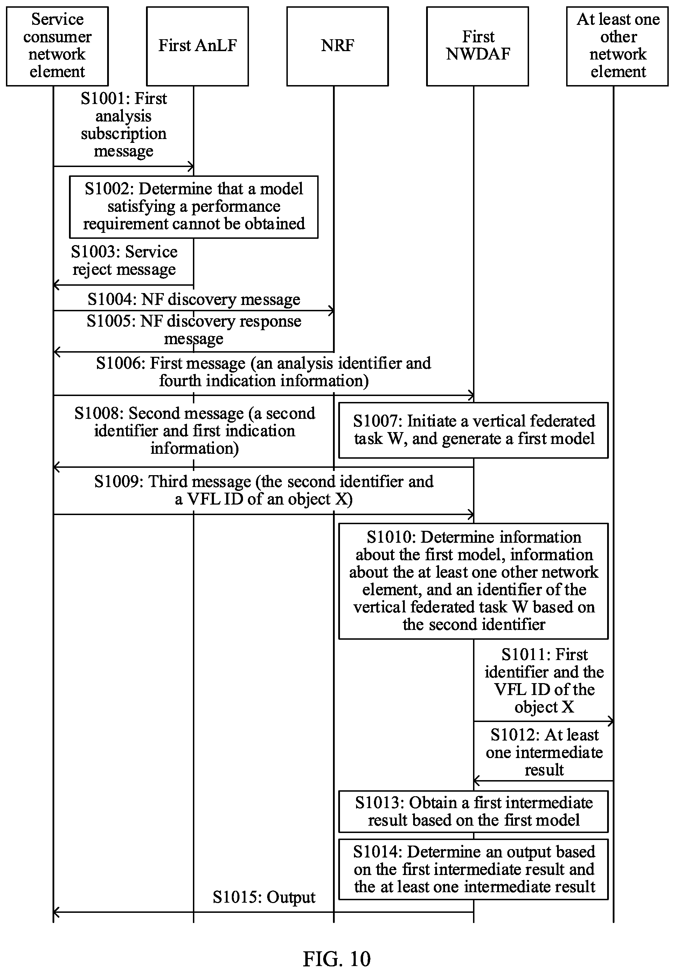

This application further provides a communication method. As shown in FIG. 10, the method includes the following steps.

S1001: A service consumer network element sends a first analysis subscription message to a first AnLF. The first analysis subscription message includes an analysis identifier, an SUPI or an NF ID of an object X, and information that indicates a model performance requirement.

S1002: The first AnLF determines that a model satisfying the performance requirement cannot be obtained.

For example, the first AnLF may request to obtain a model from a model production network element, and the first AnLF cannot obtain the model that satisfies the model performance requirement. For example, the model production network element (for example, an MTLF) cannot generate a model that satisfies the model performance requirement, and sends a model request reject message. The first AnLF determines, based on the model request reject message, that the model satisfying the requirement cannot be obtained.

For example, the first AnLF may obtain a normal model, and determine that performance of the normal model does not satisfy the performance requirement.

S1003: The first AnLF sends a service reject message to the service consumer network element.

The service reject message indicates that the first AnLF cannot obtain a model that satisfies the performance requirement.

S1004: The service consumer network element sends an NF discovery message to an NRF.

The NF discovery message is used to discover an NWDAF including an MTLF and an AnLF, the NF discovery message includes the analysis identifier and third indication information, and the third indication information is used to request an NWDAF having a vertical federated learning capability. Optionally, the NF discovery message further includes fifth indication information, and the indication information indicates the NRF to return the NWDAF including the MTLF and the AnLF. The fifth indication information and the third indication information may be further combined into one piece of indication information.

S1005: The NRF sends an NF discovery response message to the service consumer network element.

For example, the NRF determines a first NWDAF based on the NF discovery message. The first NWDAF includes an MTLF and an AnLF, and the first NWDAF has a vertical federated learning capability. The NF discovery response message includes information about the first NWDAF. When the first NWDAF sends a registration request message to the NRF, the registration request message indicates that the first NWDAF includes the MTLF and the AnLF, and the first NWDAF has the vertical federated learning capability. The NRF determines, based on the fifth indication information, an NWDAF that supports both the MTLF and the AnLF, determines, based on the third indication information, an NWDAF that has the vertical federated learning capability, and determines, based on the fifth indication information and the third indication information, an NWDAF that supports the MTLF and the AnLF and also has the vertical federated learning capability.

S 1006: The service consumer network element sends a first message to the first NWDAF. The first message includes the analysis identifier and fourth indication information, and the fourth instruction information indicates the first NWDAF to generate a vertical federated learning model corresponding to the analysis identifier. The first message further includes the information that indicates the model performance requirement.

S1007: The first NWDAF initiates a vertical federated task W, and generates a first model, where the first model is a vertical federated learning model.

For example, the first NWDAF and the at least one other network element jointly participate in the vertical federated task W, and the vertical federated task W is used to train the vertical federated learning model corresponding to the analysis identifier. The first NWDAF obtains the first model. The first model is a vertical federated learning model, the first model satisfies the performance requirement, and the first model is used to provide a service corresponding to the analysis identifier. The first NWDAF stores a correspondence between a second identifier and information about the first model. The second identifier is used to identify the first message.

S1008: The first NWDAF sends a second message to the service consumer network element, where the second message includes the second identifier and first indication information.

Optionally, the first NWDAF further sends a first mapping relationship and/or a second mapping relationship to the service consumer network element.

S1009: The service consumer network element sends a third message to the first NWDAF, where the third message includes the second identifier and a VFL ID of the object X.

Optionally, the service consumer network element determines the VFL ID of the object X based on the SUPI or the NF ID of the object X and the first mapping relationship and/or the second mapping relationship.

S1010: The first NWDAF determines the information about the first model, information about the at least one other network element, and an identifier of the vertical federated task W based on the second identifier.

For example, the first NWDAF stores a correspondence between the second identifier and the information about the first model, the information about the at least one other network element, and the identifier of the vertical federated task W.

S1011: The first NWDAF separately sends the identifier of the vertical federated task W and the VFL ID of the object X to the at least one other network element.

The following uses only an example in which a role of the first NWDAF is a primary participant for description, and does not constitute a limitation on this application.

S1012: The at least one other network element sends at least one intermediate result to the first NWDAF, where the at least one intermediate result is in one-to-one correspondence with the at least one other network element.

S1013: The first NWDAF obtains a first intermediate result based on the first model.

For example, the first NWDAF calculates the first intermediate result based on the VFL ID of the object X and the first model.

S1014: The first NWDAF determines an output based on the first intermediate result and the at least one intermediate result.

S1015: The first NWDAF sends the output to the service consumer network element.

According to the foregoing method, the service consumer network element may discover an NWDAF that supports the MTLF and the AnLF and has the vertical federated learning capability, indicate the NWDAF to initiate a vertical federated task, and provide, by using a vertical federated learning model obtained by using the vertical federated task, the service corresponding to the analysis identifier.

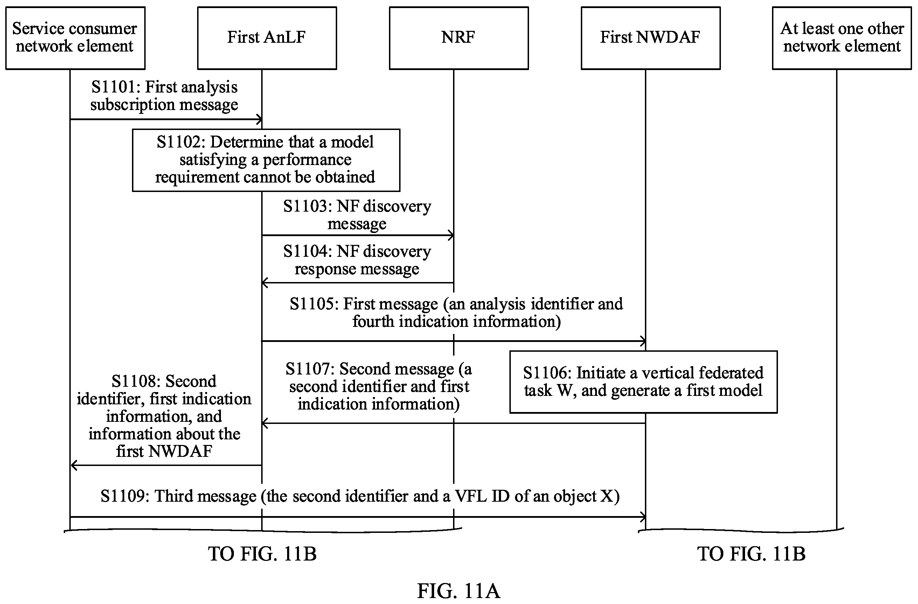

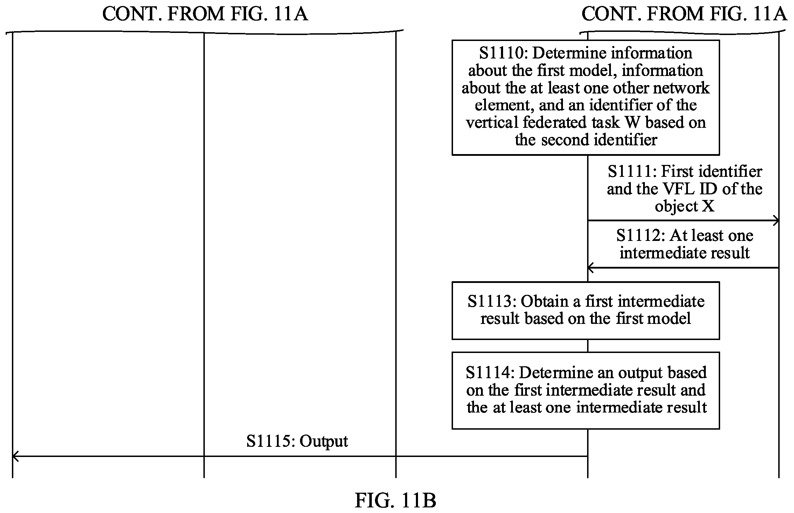

This application further provides a communication method. As shown in FIG. 11A and FIG. 11B, the method includes the following steps.

S1101: A service consumer network element sends a first analysis subscription message to a first AnLF. The first analysis subscription message includes an analysis identifier, an SUPI or an NF ID of an object X, and information that indicates a model performance requirement.

S1102: The first AnLF determines that a model satisfying the performance requirement cannot be obtained.

S1103: The first AnLF sends an NF discovery message to an NRF.

The NF discovery message is used to discover an NWDAF including an MTLF and an AnLF, the NF discovery message includes the analysis identifier and third indication information, and the third indication information is used to request an NWDAF having a vertical federated learning capability. Optionally, the NF discovery message further includes fifth indication information, and the indication information indicates the NRF to return the NWDAF including the MTLF and the AnLF. The fifth indication information and the third indication information may be further combined into one piece of indication information.

S1104: The first AnLF sends an NF discovery response message to the NRF.

For example, the NRF determines a first NWDAF based on the NF discovery message. The first NWDAF includes an MTLF and an AnLF, and the first NWDAF has a vertical federated learning capability. The NF discovery response message includes information about the first NWDAF. When the first NWDAF sends a registration request message to the NRF, the registration request message indicates that the first NWDAF includes the MTLF and the AnLF, and the first NWDAF has the vertical federated learning capability. The NRF determines, based on the fifth indication information, an NWDAF that supports both the MTLF and the AnLF, determines, based on the third indication information, an NWDAF that has the vertical federated learning capability, and determines, based on the fifth indication information and the third indication information, an NWDAF that supports the MTLF and the AnLF and also has the vertical federated learning capability.

S1105: The first AnLF sends a first message to the first NWDAF. The first message includes the analysis identifier and fourth indication information, and the fourth instruction information indicates the first NWDAF to generate a vertical federated learning model corresponding to the analysis identifier. The first message further includes the information that indicates the model performance requirement.

S1106: The first NWDAF initiates a vertical federated task W, and generates a first model, where the first model is a vertical federated learning model.

For example, the first NWDAF and the at least one other network element jointly participate in the vertical federated task W, and the vertical federated task W is used to train the vertical federated learning model corresponding to the analysis identifier. The first NWDAF obtains the first model. The first model is a vertical federated learning model, the first model satisfies the performance requirement, and the first model is used to provide a service corresponding to the analysis identifier. The first NWDAF stores a correspondence between a second identifier and information about the first model. The second identifier is used to identify the first message.

S1107: The first NWDAF sends a second message to the first AnLF, where the second message includes the second identifier and first indication information.

Optionally, the first NWDAF further sends a first mapping relationship and/or a second mapping relationship to the first AnLF.

S1108: The first AnLF sends the second identifier, the first indication information, and the information about the first NWDAF to the service consumer network element.

Optionally, the first AnLF further sends the first mapping relationship and/or the second mapping relationship to the first NWDAF.

For S1109 to S1115, refer to S1009 to S1015. Details are not described herein again.

According to the foregoing method, the first AnLF may discover an NWDAF that supports the MTLF and the AnLF and also has the vertical federated learning capability, and indicate the NWDAF to initiate a vertical federated task, so that the service consumer network element provides, by using a vertical federated learning model obtained by using the vertical federated task, the service corresponding to the analysis identifier.

It may be understood that, to implement the functions in the foregoing embodiments, the first network element and the second network element include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

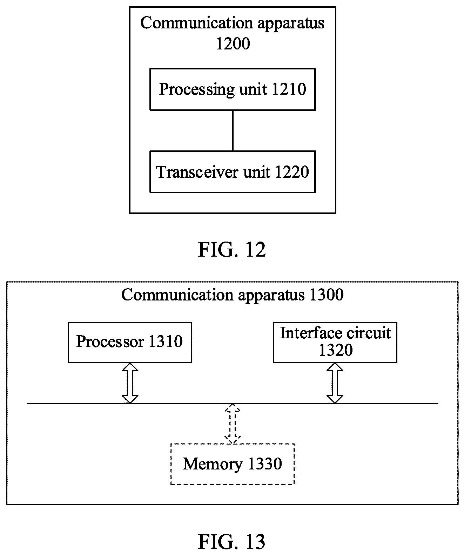

FIG. 12 and FIG. 13 are diagrams of structures of possible communication apparatuses according to embodiments of this application. These communication apparatuses may be configured to implement the functions of the first network element or the second network element in the foregoing method embodiments, and therefore may also implement beneficial effects of the foregoing method embodiments.

As shown in FIG. 12, a communication apparatus 1200 includes a processing unit 1210 and a transceiver unit 1220. The communication apparatus 1200 is configured to implement the functions of the first network element or the second network element in the foregoing method embodiments.

When the communication apparatus 1200 is configured to implement the functions of the first network element in the foregoing method embodiments:

The transceiver unit 1220 is configured to receive and send a message. The processing unit 1210 is configured to: send a first message to a second network element, and receive a second message from the second network element through the transceiver unit 1220, where the first message includes an analysis identifier, and the first message is used to request a model for providing a service corresponding to the analysis identifier; and the second message includes a first identifier, information about M network elements, and information about a first model, the first identifier is associated with the analysis identifier, the first identifier corresponds to at least two vertical federated learning models, the M network elements provide a service by using the at least two vertical federated learning models, M is a positive integer, and the at least two vertical federated learning models include the first model.

In a possible design, the processing unit 1210 is configured to determine at least one network element based on the information about the M network elements; and the transceiver unit 1220 is configured to send a third message to the at least one network element, where the third message includes the first identifier, and the third message is used to request the vertical federated learning models corresponding to the first identifier to provide a service.

In a possible design, the processing unit 1210 is configured to obtain a first intermediate result based on the first model; the transceiver unit 1220 is configured to receive at least one intermediate result from the at least one network element, where the at least one network element is in one-to-one correspondence with the at least one intermediate result; the processing unit 1210 is configured to determine an output based on the first intermediate result and the at least one intermediate result; and the transceiver unit 1220 is configured to send the output to a service consumer network element.

In a possible design, the processing unit 1210 is configured to obtain a first intermediate result based on the first model; and the transceiver unit 1220 is configured to: send the first intermediate result to a third network element, receive an output from the third network element, and send the output to a service consumer network element, where the third network element is one of the at least one network element.

In a possible design, the transceiver unit 1220 is configured to: before sending the first message to the second network element, receive a fourth message from the service consumer network element, where the fourth message includes the analysis identifier and information about a first object, the first object corresponds to the analysis identifier, and the fourth message is used to request the service corresponding to the analysis identifier.

In a possible design, the third message further includes the information about the first object.

In a possible design, the second message further indicates or includes a first mapping relationship, and the first mapping relationship is a mapping relationship between the first object and an object for the first object in a vertical federated task corresponding to the first identifier. It may be understood that the first mapping relationship is a mapping relationship between an identifier of the first object and an identifier of the first object in the vertical federated task corresponding to the first identifier. The first network element determines, based on the identifier of the first object and the first mapping relationship, the identifier of the first object in the vertical federated task corresponding to the first identifier.

In a possible design, the second message further indicates or includes a first mapping relationship and/or a second mapping relationship, the first mapping relationship is between a network entity identifier and an identifier in a vertical federated task corresponding to the first identifier, and the second mapping relationship is between a user entity identifier and an identifier in the vertical federated task corresponding to the first identifier. It may be understood that the first mapping relationship is a relationship between a network entity identifier and an identifier in the vertical federated task corresponding to the first identifier, and the second mapping relationship is a relationship between a user entity identifier and an identifier in the vertical federated task corresponding to the first identifier.

In a possible design, the third message further includes an identifier of the first object in a vertical federated task corresponding to the first identifier. The second message further indicates or includes a first mapping relationship and/or a second mapping relationship, the first mapping relationship is between a network entity identifier and an identifier in the vertical federated task corresponding to the first identifier, and the second mapping relationship is between a user entity identifier and an identifier in the vertical federated task corresponding to the first identifier. The processing unit 1210 is configured to: if the information about the first object includes a network entity identifier of the first object, determine, based on the network entity identifier of the first object and the first mapping relationship, the identifier of the first object in the vertical federated task corresponding to the first identifier; or if the information about the first object includes a user entity identifier of the first object, determine, based on the user entity identifier of the first object and the second mapping relationship, the identifier of the first object in the vertical federated task corresponding to the first identifier.

In a possible design, the second message further includes first indication information, and the first indication information indicates that the first model is a vertical federated learning model, or the first indication information indicates that a model corresponding to the first identifier is a vertical federated learning model, or the first indication information indicates that a task corresponding to the first identifier is a vertical federated task.

In a possible design, the information about the M network elements includes at least one of network entity identifiers of the M network elements, subscription correlation addresses of the M network elements, and role information of the M network elements.

In a possible design, a j^{th} network element is any one of the M network elements, and role information of the j^{th} network element indicates a role of a producer of a j^{th} vertical federated learning model in the vertical federated task corresponding to the first identifier. The j^{th} network element is a user of the j^{th} vertical federated learning model, and the at least two vertical federated learning models corresponding to the first identifier include the j^{th} vertical federated learning model, where j is less than or equal to M, and j is a positive integer.

When the communication apparatus 1200 is configured to implement the functions of the first network element in the foregoing method embodiments:

The transceiver unit 1220 is configured to receive and send a message. The processing unit 1210 is configured to: receive a first message from a first network element, and send a second message to the first network element through the transceiver unit 1220, where the first message includes an analysis identifier, and the first message is used to request a model for providing a service corresponding to the analysis identifier; and the second message includes a first identifier, information about M network elements, and information about a first model, the first identifier is associated with the analysis identifier, the first identifier corresponds to at least two vertical federated learning models, the M network elements provide a service by using the at least two vertical federated learning models, M is a positive integer, and the at least two vertical federated learning models include the first model.

In a possible design, the processing unit 1210 is configured to: before the second message is sent to the first network element, determine at least one of the first identifier, the information about the M network elements, and the information about the first model based on the analysis identifier.

In a possible design, the second message further indicates or includes a first mapping relationship, and the first mapping relationship is a mapping relationship between a first object and an object for the first object in a vertical federated task corresponding to the first identifier. It may be understood that the first mapping relationship is a mapping relationship between an identifier of the first object and an identifier of the first object in the vertical federated task corresponding to the first identifier. The first network element determines, based on the identifier of the first object and the first mapping relationship, the identifier of the first object in the vertical federated task corresponding to the first identifier.

In a possible design, the second message further indicates or includes a first mapping relationship and/or a second mapping relationship, the first mapping relationship is between a network entity identifier and an identifier in a vertical federated task corresponding to the first identifier, and the second mapping relationship is between a user entity identifier and an identifier in the vertical federated task corresponding to the first identifier. It may be understood that the first mapping relationship is a relationship between a network entity identifier and an identifier in the vertical federated task corresponding to the first identifier, and the second mapping relationship is a relationship between a user entity identifier and an identifier in the vertical federated task corresponding to the first identifier.

In a possible design, the second message further indicates a first mapping relationship and/or a second mapping relationship, the first mapping relationship is between a network entity identifier and an identifier in a vertical federated task corresponding to the first identifier, and the second mapping relationship is between a user entity identifier and an identifier in the vertical federated task corresponding to the first identifier.

In a possible design, the second message further includes first indication information, and the first indication information indicates that the first model is a vertical federated learning model, or the first indication information indicates that a model corresponding to the first identifier is a vertical federated learning model, or the first indication information indicates that a task corresponding to the first identifier is a vertical federated task.

In a possible design, the information about the M network elements includes at least one of network entity identifiers of the M network elements, subscription correlation addresses of the M network elements, and role information of the M network elements.

In a possible design, a j^{th} network element is any one of the M network elements, and role information of the j^{th} network element indicates a role of a producer of a j^{th} vertical federated learning model in the vertical federated task corresponding to the first identifier. The j^{th} network element is a user of the j^{th} vertical federated learning model, and the at least two vertical federated learning models corresponding to the first identifier include the j^{th} vertical federated learning model, where j is less than or equal to M, and j is a positive integer.

When the communication apparatus 1200 is configured to implement the functions of the second network element in the foregoing method embodiments:

The transceiver unit 1220 is configured to receive and send a message. The processing unit 1210 is configured to: send a first message to a second network element, receive a second message from the second network element, and send a third message to the second network element through the transceiver unit 1220, where the first message includes an analysis identifier, and the first message is used to request a model for providing a service corresponding to the analysis identifier; the second message includes a second identifier and first indication information, the first indication information indicates that the model for providing the service corresponding to the analysis identifier is a vertical federated learning model, and the second identifier is used to identify the first message; and the third message is used to request the service corresponding to the analysis identifier, and the third message includes the second identifier.

In a possible design, the transceiver unit 1220 is configured to: receive an output from the second network element; and send the output to a service consumer network element.

In a possible design, the transceiver unit 1220 is configured to: before sending the first message to the second network element, receive a fourth message from the service consumer network element, where the fourth message includes the analysis identifier and information about a first object, the first object corresponds to the analysis identifier, and the fourth message is used to request the service corresponding to the analysis identifier.

In a possible design, the third message further includes the information about the first object.

In a possible design, the second message further indicates or includes a first mapping relationship, and the first mapping relationship is a mapping relationship between the first object and an object for the first object in a vertical federated task corresponding to the first identifier. It may be understood that the first mapping relationship is a mapping relationship between an identifier of the first object and an identifier of the first object in the vertical federated task corresponding to the first identifier. The first network element determines, based on the identifier of the first object and the first mapping relationship, the identifier of the first object in the vertical federated task corresponding to the first identifier.

In a possible design, the second message further indicates or includes a first mapping relationship and/or a second mapping relationship, the first mapping relationship is between a network entity identifier and an identifier in a vertical federated task corresponding to the first identifier, and the second mapping relationship is between a user entity identifier and an identifier in the vertical federated task corresponding to the first identifier. It may be understood that the first mapping relationship is a relationship between a network entity identifier and an identifier in the vertical federated task corresponding to the first identifier, and the second mapping relationship is a relationship between a user entity identifier and an identifier in the vertical federated task corresponding to the first identifier.

In a possible design, the third message further includes an identifier of the first object in the vertical federated learning model. The second message further indicates a first mapping relationship and/or a second mapping relationship, the first mapping relationship is between a network entity identifier and an identifier in the vertical federated learning model, and the second mapping relationship is between a user entity identifier and an identifier in the vertical federated learning model. The processing unit 1210 is configured to: if the information about the first object includes a network entity identifier of the first object, determine the identifier of the first object in the vertical federated learning model based on the network entity identifier of the first object and the first mapping relationship; or if the information about the first object includes a user entity identifier of the first object, determine the identifier of the first object in the vertical federated learning model based on the user entity identifier of the first object and the second mapping relationship.

When the communication apparatus 1200 is configured to implement the functions of the second network element in the foregoing method embodiments:

The transceiver unit 1220 is configured to receive and send a message. The processing unit 1210 is configured to: receive a first message from a first network element, send a second message to the first network element, and receive a third message from the first network element through the transceiver unit 1220, where the first message includes an analysis identifier, and the first message is used to request a model for providing a service corresponding to the analysis identifier; the second message includes a second identifier and first indication information, the first indication information indicates that the model for providing the service corresponding to the analysis identifier is a vertical federated learning model, and the second identifier is used to identify the first message; and the third message is used to request the service corresponding to the analysis identifier, and the third message includes the second identifier.

In a possible design, the processing unit 1210 is configured to: before sending the second message to the first network element, determine, by a second network element, information about a first model based on the analysis identifier; and store a correspondence between the second identifier and the information about the first model.

In a possible design, the processing unit 1210 is configured to: when determining the information about the first model based on the analysis identifier, determine, by the second network element, the information about the first model, information about M network elements, and a first identifier based on the analysis identifier; and when the second network element stores the correspondence between the second identifier and the information about the first model, store a correspondence between the second identifier and the information about the first model, the information about the M network elements, and the first identifier, where the first identifier is associated with the analysis identifier, the first identifier corresponds to at least two vertical federated learning models, the M network elements provide a service by using the at least two vertical federated learning models, M is a positive integer, and the at least two vertical federated learning models include the first model.

In a possible design, the processing unit 1210 is configured to: after receiving the third message from the first network element, determine the information about the first model, the information about the M network elements, and the first identifier based on the second identifier; and determine at least one network element based on the information about the M network elements. The transceiver unit 1220 is configured to send a fifth message to the at least one network element, where the fifth message includes the first identifier, and the fifth message is used to request the vertical federated learning models corresponding to the first identifier to provide a service. The processing unit 1210 is configured to obtain a first intermediate result based on the first model. The transceiver unit 1220 is configured to receive at least one intermediate result from the at least one network element, where the at least one network element is in one-to-one correspondence with the at least one intermediate result. The processing unit 1210 is configured to determine the output based on the first intermediate result and the at least one intermediate result.

In a possible design, the processing unit 1210 is configured to: after receiving the third message from the first network element, determine the information about the first model, the information about the M network elements, and the first identifier based on the second identifier; and determine at least one network element based on the information about the M network elements. The transceiver unit 1220 is configured to send a fifth message to the at least one network element, where the fifth message includes the first identifier, and the third message is used to request the vertical federated learning models corresponding to the first identifier to provide a service. The processing unit 1210 is configured to obtain a first intermediate result based on the first model. The transceiver unit 1220 is configured to send the first intermediate result to the third network element, and receive, by the second network element, an output from the third network element.

In a possible design, the transceiver unit 1220 is configured to send the output to the first network element.

In a possible design, the third message further includes information about a first object, and/or an identifier of the first object in a vertical federated task corresponding to the first identifier.

In a possible design, the second message further indicates a first mapping relationship and/or a second mapping relationship, the first mapping relationship is between a network entity identifier and an identifier in a vertical federated task corresponding to the first identifier, and the second mapping relationship is between a user entity identifier and an identifier in the vertical federated task corresponding to the first identifier.

In a possible design, the second message further indicates or includes a first mapping relationship, and the first mapping relationship is a mapping relationship between the first object and an object for the first object in a vertical federated task corresponding to the first identifier. It may be understood that the first mapping relationship is a mapping relationship between an identifier of the first object and an identifier of the first object in the vertical federated task corresponding to the first identifier. The first network element determines, based on the identifier of the first object and the first mapping relationship, the identifier of the first object in the vertical federated task corresponding to the first identifier.

In a possible design, the second message further indicates or includes a first mapping relationship and/or a second mapping relationship, the first mapping relationship is between a network entity identifier and an identifier in a vertical federated task corresponding to the first identifier, and the second mapping relationship is between a user entity identifier and an identifier in the vertical federated task corresponding to the first identifier. It may be understood that the first mapping relationship is a relationship between a network entity identifier and an identifier in the vertical federated task corresponding to the first identifier, and the second mapping relationship is a relationship between a user entity identifier and an identifier in the vertical federated task corresponding to the first identifier.

For more detailed descriptions of the processing unit 1210 and the transceiver unit 1220, directly refer to related descriptions in the foregoing method embodiments. Details are not described herein again.

As shown in FIG. 13, a communication apparatus 1300 includes a processor 1310 and an interface circuit 1320. The processor 1310 and the interface circuit 1320 are coupled to each other. It may be understood that the interface circuit 1320 may be a transceiver or an input/output interface. Optionally, the communication apparatus 1300 may further include a memory 1330, configured to store instructions executed by the processor 1310, store input data required by the processor 1310 to run the instructions, or store data generated after the processor 1310 runs the instructions.

When the communication apparatus 1300 is configured to implement the method shown in FIG. 5, the processor 1310 is configured to implement a function of the processing unit 1210, and the interface circuit 1320 is configured to implement a function of the transceiver unit 1220.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general purpose processor may be a microprocessor or any regular processor or the like.

This application provides another example of an apparatus. A notification apparatus includes at least one processor and at least one memory. The at least one processor is coupled to the at least one memory. The at least one memory is configured to store instructions. When the instructions are executed by the at least one processor, the communication apparatus is caused to perform the method in the foregoing embodiments. For example, the communication apparatus includes a processor and a memory. As shown in FIG. 13, the communication apparatus 1300 includes a processor 1310 and a memory 1330. The processor 1310 is coupled to the memory 1330. The memory 1330 stores instructions. When the instructions stored in the memory 1330 are executed by the processor 1310, the communication apparatus 1300 performs the methods performed by the network elements in the foregoing embodiments.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be located in an ASIC. In addition, the ASIC may be located in the foregoing network element. The processor and the storage medium may alternatively exist in the foregoing network elements as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape, may be an optical medium, for example, a digital video disc, or may be a semiconductor medium, for example, a solid-state drive. The computer-readable storage medium may be a volatile or non-volatile storage medium, or may include two types of storage media: a volatile storage medium and a non-volatile storage medium.

In this application, at least one means one or more, and a plurality of means two or more. In addition, "and/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:
sending, by a first network element, a first message to a second network element, wherein the first message comprises an analysis identifier, and the first message is used to request a model for providing a service corresponding to the analysis identifier; and
receiving, by the first network element, a second message from the second network element, wherein the second message comprises a first identifier, information about M network elements, and information about a first model, wherein
the first identifier is associated with the analysis identifier, the first identifier corresponds to at least two vertical federated learning models, the M network elements provide a service by using the at least two vertical federated learning models, M is a positive integer, and the at least two vertical federated learning models comprise the first model.

2. The method according to claim 1, further comprising:
determining, by the first network element, at least one network element based on the information about the M network elements; and
sending, by the first network element, a third message to the at least one network element, wherein the third message comprises the first identifier, and the third message is used to request to the vertical federated learning models corresponding to the first identifier to provide a service.

3. The method according to claim 2, wherein the method further comprises:
obtaining, by the first network element, a first intermediate result based on the first model;
receiving, by the first network element, at least one intermediate result from the at least one network element, wherein the at least one network element is in one-to-one correspondence with the at least one intermediate result;
determining, by the first network element, an output based on the first intermediate result and the at least one intermediate result; and
sending, by the first network element, the output to a service consumer network element.

4. The method according to claim 2, wherein the method further comprises:
obtaining, by the first network element, a first intermediate result based on the first model;
sending, by the first network element, the first intermediate result to a third network element, wherein the third network element is one of the at least one network element;
receiving, by the first network element, an output from the third network element; and
sending, by the first network element, the output to a service consumer network element.

5. The method according to any one of claims 2 to 4, wherein before the first network element sends the first message to the second network element, the method further comprises:
receiving, by the first network element, a fourth message from the service consumer network element, wherein the fourth message comprises the analysis identifier and information about a first object, the first object corresponds to the analysis identifier, and the fourth message is used to request the service corresponding to the analysis identifier.

6. The method according to claim 5, wherein the third message further comprises the information about the first object.

7. The method according to claim 5 or 6, wherein the third message further comprises an identifier of the first object in a vertical federated task corresponding to the first identifier, the second message further comprises a first mapping relationship and/or a second mapping relationship, the first mapping relationship is between a network entity identifier and an identifier in the vertical federated task corresponding to the first identifier, and the second mapping relationship is between a user entity identifier and an identifier in the vertical federated task corresponding to the first identifier; and
the method further comprises:
if the information about the first object comprises a network entity identifier of the first object, determining, by the first network element based on the network entity identifier of the first object and the first mapping relationship, the identifier of the first object in the vertical federated task corresponding to the first identifier; or
if the information about the first object comprises a user entity identifier of the first object, determining, by the first network element based on the user entity identifier of the first object and the second mapping relationship, the identifier of the first object in the vertical federated task corresponding to the first identifier.

8. The method according to any one of claims 1 to 7, wherein the second message further comprises first indication information, and the first indication information indicates that the first model is a vertical federated learning model, or the first indication information indicates that a model corresponding to the first identifier is a vertical federated learning model, or the first indication information indicates that a task corresponding to the first identifier is a vertical federated task.

9. The method according to any one of claims 1 to 8, wherein the information about the M network elements comprises at least one of network entity identifiers of the M network elements, subscription correlation addresses of the M network elements, and role information of the M network elements.

10. The method according to claim 9, wherein a j^{th} network element is any one of the M network elements, the at least two vertical federated learning models corresponding to the first identifier comprise a j^{th} vertical federated learning model, the j^{th} network element provides a service by using the j^{th} vertical federated learning model, role information of the j^{th} network element indicates a role of a producer of the j^{th} vertical federated learning model in the vertical federated task corresponding to the first identifier; and j is less than or equal to M, and j is a positive integer.

11. A communication method, wherein the method comprises:
receiving, by a second network element, a first message from a first network element, wherein the first message comprises an analysis identifier, and the first message is used to request a model for providing a service corresponding to the analysis identifier; and
sending, by the second network element, a second message to the first network element, wherein the second message comprises a first identifier, information about M network elements, and information about a first model, wherein
the first identifier is associated with the analysis identifier, the first identifier corresponds to at least two vertical federated learning models, the M network elements provide a service by using the at least two vertical federated learning models, M is a positive integer, and the at least two vertical federated learning models comprise the first model.

12. The method according to claim 11, wherein before the second network element sends the second message to the first network element, the method further comprises:
determining, by the second network element, at least one of the first identifier, the information about the M network elements, and the information about the first model based on the analysis identifier.

13. The method according to claim 11 or 12, wherein the second message further indicates a first mapping relationship and/or a second mapping relationship, the first mapping relationship is between a network entity identifier and an identifier in a vertical federated task corresponding to the first identifier, and the second mapping relationship is between a user entity identifier and an identifier in the vertical federated task corresponding to the first identifier.

14. The method according to any one of claims 11 to 13, wherein the second message further comprises first indication information, and the first indication information indicates that the first model is a vertical federated learning model, or the first indication information indicates that a model corresponding to the first identifier is a vertical federated learning model, or the first indication information indicates that a task corresponding to the first identifier is a vertical federated task.

15. The method according to any one of claims 11 to 14, wherein the information about the M network elements comprises at least one of network entity identifiers of the M network elements, subscription correlation addresses of the M network elements, and role information of the M network elements.

16. The method according to claim 15, wherein a j^{th} network element is any one of the M network elements, the at least two vertical federated learning models corresponding to the first identifier comprise a j^{th} vertical federated learning model, the j^{th} network element provides a service by using the j^{th} vertical federated learning model, role information of the j^{th} network element indicates a role of a producer of the j^{th} vertical federated learning model in the vertical federated task corresponding to the first identifier; and j is less than or equal to M, and j is a positive integer.

17. A communication method, wherein the method comprises:
sending, by a first network element, a first message to a second network element, wherein the first message comprises an analysis identifier, and the first message is used to request a model for providing a service corresponding to the analysis identifier;
receiving, by the first network element, a second message from the second network element, wherein the second message comprises a second identifier and first indication information, the first indication information indicates that the model for providing the service corresponding to the analysis identifier is a vertical federated learning model, and the second identifier is used to identify the first message; and
sending, by the first network element, a third message to the second network element, wherein the third message is used to request the service corresponding to the analysis identifier, and the third message comprises the second identifier.

18. The method according to claim 17, wherein the method further comprises:
receiving, by the first network element, an output from the second network element; and
sending, by the first network element, the output to a service consumer network element.

19. The method according to claim 17 or 18, wherein before the first network element sends the first message to the second network element, the method further comprises:
receiving, by the first network element, a fourth message from the service consumer network element, wherein the fourth message comprises the analysis identifier and information about a first object, the first object corresponds to the analysis identifier, and the fourth message is used to request the service corresponding to the analysis identifier.

20. The method according to claim 19, wherein the third message further comprises the information about the first object.

21. The method according to claim 19 or 20, wherein the third message further comprises an identifier of the first object in the vertical federated learning model, the second message further indicates a first mapping relationship and/or a second mapping relationship, the first mapping relationship is between a network entity identifier and an identifier in the vertical federated learning model, and the second mapping relationship is between a user entity identifier and an identifier in the vertical federated learning model; and
the method further comprises:
if the information about the first object comprises a network entity identifier of the first object, determining, by the first network element, the identifier of the first object in the vertical federated learning model based on the network entity identifier of the first object and the first mapping relationship; or
if the information about the first object comprises a user entity identifier of the first object, determining, by the first network element, the identifier of the first object in the vertical federated learning model based on the user entity identifier of the first object and the second mapping relationship.

22. A communication method, wherein the method comprises:
receiving, by a second network element, a first message from a first network element, wherein the first message comprises an analysis identifier, and the first message is used to request a model for providing a service corresponding to the analysis identifier;
sending, by the second network element, a second message to the first network element, wherein the second message comprises a second identifier and first indication information, the first indication information indicates that the model for providing the service corresponding to the analysis identifier is a vertical federated learning model, and the second identifier is used to identify the first message; and
receiving, by the second network element, a third message from the first network element, wherein the third message is used to request the service corresponding to the analysis identifier, and the third message comprises the second identifier.

23. The method according to claim 22, wherein before the second network element sends the second message to the first network element, the method further comprises:
determining, by the second network element, information about a first model based on the analysis identifier; and
storing, by the second network element, a correspondence between the second identifier and the information about the first model.

24. The method according to claim 23, wherein determining, by the second network element, the information about the first model based on the analysis identifier comprises:
determining, by the second network element, the information about the first model, information about M network elements, and a first identifier based on the analysis identifier; and
storing, by the second network element, the correspondence between the second identifier and the information about the first model comprises:
storing, by the second network element, a correspondence between the second identifier and the information about the first model, the information about the M network elements, and the first identifier, wherein
the first identifier is associated with the analysis identifier, the first identifier corresponds to at least two vertical federated learning models, the M network elements provide a service by using the at least two vertical federated learning models, M is a positive integer, and the at least two vertical federated learning models comprise the first model.

25. The method according to claim 24, wherein after the second network element receives the third message from the first network element, the method further comprises:
determining, by the second network element, the information about the first model, the information about M network elements, and the first identifier based on the second identifier;
determining, by the second network element, at least one network element based on the information about the M network elements;
sending, by the second network element, a fifth message to the at least one network element, wherein the fifth message comprises the first identifier, and the fifth message is used to request the vertical federated learning models corresponding to the first identifier to provide a service;
obtaining, by the second network element, a first intermediate result based on the first model;
receiving, by the second network element, at least one intermediate result from the at least one network element, wherein the at least one network element is in one-to-one correspondence with the at least one intermediate result; and
determining, by the second network element, the output based on the first intermediate result and the at least one intermediate result.

26. The method according to claim 24, wherein after the second network element receives the third message from the first network element, the method further comprises:
determining, by the second network element, the information about the first model, the information about M network elements, and the first identifier based on the second identifier;
determining, by the second network element, at least one network element based on the information about the M network elements;
sending, by the second network element, a fifth message to the at least one network element, wherein the fifth message comprises the first identifier, and the third message is used to request the vertical federated learning models corresponding to the first identifier to provide a service;
obtaining, by the second network element, a first intermediate result based on the first model;
sending, by the second network element, the first intermediate result to the third network element; and
receiving, by the second network element, an output from the third network element.

27. The method according to claim 25 or 26, further comprising:
sending, by the second network element, the output to the first network element.

28. The method according to any one of claims 24 to 27, wherein the third message further comprises information about a first object, and/or an identifier of the first object in a vertical federated task corresponding to the first identifier.

29. The method according to claim 28, wherein the second message further indicates a first mapping relationship and/or a second mapping relationship, the first mapping relationship is between a network entity identifier and an identifier in the vertical federated task corresponding to the first identifier, and the second mapping relationship is between a user entity identifier and an identifier in the vertical federated task corresponding to the first identifier.

30. A communication apparatus, comprising a unit or a module configured to perform the method according to any one of claims 1 to 29.

31. A communication apparatus, wherein the communication apparatus comprises at least one processor, and the at least one processor is configured to perform the method according to any one of claims 1 to 29.

32. A computer-readable storage medium, wherein the computer-readable storage medium comprises a program, and when the program is run on an apparatus, the apparatus is caused to perform the method according to any one of claims 1 to 29.

33. A computer program product, wherein the computer program product comprises a program or instructions, and when the program or the instructions are executed by an apparatus, the apparatus is caused to perform the method according to any one of claims 1 to 29.
